(19) Europäisches Patentamt
European Patent Office
Office européen des brevets

(11) **EP 4 045 263 B1**

(12) **EUROPÄISCHE PATENTSCHRIFT**

(45) Veröffentlichungstag und Bekanntmachung des Hinweises auf die Patenterteilung:
**14.08.2024 Patentblatt 2024/33**

(21) Anmeldenummer: **20789154.0**

(22) Anmeldetag: **13.10.2020**

(51) Internationale Patentklassifikation (IPC):
**B29C 45/16** (2006.01)    **B29C 45/18** (2006.01)
**B29C 45/20** (2006.01)    **B29C 45/58** (2006.01)

(52) Gemeinsame Patentklassifikation (CPC):
**B29C 45/1634; B29C 45/1858; B29C 45/20; B29C 45/581**

(86) Internationale Anmeldenummer:
**PCT/EP2020/078774**

(87) Internationale Veröffentlichungsnummer:
**WO 2021/074148 (22.04.2021 Gazette 2021/16)**

(54) **SPRITZGUSSWERKZEUG UND VERFAHREN ZU DESSEN HERSTELLUNG SOWIE VERFAHREN ZUR HERSTELLUNG VON MARMORIERTEN FORMTEILEN**

METHOD AND DEVICE FOR PRODUCING MARBLED MOULDED PARTS AND METHOD FOR PRODUCING SAID DEVICE

PROCÉDÉ ET DISPOSITIF DE FABRICATION DE PIÈCES MOULÉES MARBRÉES ET PROCÉDÉ DE FABRICATION DUDIT DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2019 EP 19203163**
**05.05.2020 EP 20172936**

(43) Veröffentlichungstag der Anmeldung:
**24.08.2022 Patentblatt 2022/34**

(73) Patentinhaber: **BASF SE**
**67056 Ludwigshafen am Rhein (DE)**

(72) Erfinder:
• **JAKOBI, Reinhard**
**67056 Ludwigshafen (DE)**
• **ZEIHER, Susanne**
**67056 Ludwighafen (DE)**
• **HOMES, Angelika**
**67056 Ludwigshafen (DE)**
• **SCHWENDY, Sascha Tim**
**67056 Ludwgshafen (DE)**
• **MEIERHOEFER, Natascha Manuela**
**67056 Ludwigshafen (DE)**
• **LEUTZ, Daniel**
**67056 Ludwigshafen (DE)**

(74) Vertreter: **BASF IP Association**
**BASF SE**
**GBI-C006**
**67056 Ludwigshafen (DE)**

(56) Entgegenhaltungen:
EP-A1- 2 781 332          EP-B1- 0 614 746
WO-A1-2019/145877         WO-A1-97/20674
DE-A1- 1 933 570          DE-A1- 19 730 380
DE-C2- 19 730 380         FR-A1- 2 482 899
GB-A- 2 028 218           JP-A- H0 392 320
JP-A- H10 168 253         JP-A- H11 138 530
JP-A- S57 125 027         JP-A- S57 203 524
US-A1- 2015 110 918

• STUECK D: "Verweilzeit im Griff", PLASTVERARBEITER, HUETHIG GMBH, HEIDELBERG, DE, vol. 54, no. 4, 1 January 2003 (2003-01-01), pages 56 - 57, XP009011004, ISSN: 0032-1338

**Beschreibung**

Die Erfindung betrifft ein Spritzgusswerkzeug zur Herstellung von marmorierten Formteilen, umfassend mindestens einen Heißkanal, eine Kavität, eine Eintrittsöffnung in das Spritzgusswerkzeug und einen Einlass in die Kavität, wobei der Heißkanal mindestens zwei Kanäle aufweist, die an einem ersten Ende jeden Kanals mit dem Einlass in die Kavität und an einem zweiten Ende jeden Kanals mit der Eintrittsöffnung in das Spritzgusswerkzeug verbunden sind.

Ferner betrifft die Erfindung ein Verfahren zur Herstellung von marmorierten Formteilen, wobei eine erste Formmasse und mindestens eine weitere Formmasse aus einer Einspritzeinheit einer Schneckenspritzgussmaschine in ein Spritzgusswerkzeug eingespritzt werden und das Spritzgusswerkzeug mindestens einen Heißkanal und eine Kavität aufweist.

Ein marmoriertes Formteil weist typischerweise mindestens eine marmorierte, also gemusterte Sichtfläche auf, die Oberflächeneffekte wie Farbschattierungen, farbige Schlieren, Linien und Strukturen zeigt. In marmorierten Formteilen ist zumindest ein Teil von enthaltenen Färbemitteln nicht gleichmäßig verteilt. Die Ausbildung der Marmorierungseffekte ist von den Anteilen verschiedener Farben sowie der Grundfarbe des Formteils abhängig. Marmorierte Formteile sind häufig optisch nicht vollständig identisch. Wenn sie ein wiederkehrendes Erkennungsmuster in der Farbstruktur erkennen lassen, können sie auch als Formteile mit reproduzierbarer Marmorierung bezeichnet werden. Insbesondere die Grundfarbe, die Schattierungen und das Grundmuster liegen in reproduzierbar marmorierten Formteilen wiederkehrend vor, wobei Abweichungen in der Helligkeit der Farbgebung auftreten können.

Zur Herstellung von Formteilen, insbesondere Kunststoff-Formteilen aus Pulvern, Granulaten oder Formmassen, die jeweils als Mischungen vorliegen können, werden häufig Schneckenspritzgussmaschinen eingesetzt. Für die Herstellung von farbigen Kunststoffteilen wird häufig eingefärbtes Kunststoffgranulat verwendet oder farbneutrales Granulat mit eingefärbtem Kunststoffgranulat mit hoher Pigmentkonzentration vor oder während der Verflüssigung des Kunststoffs in einem Extruder gemischt. Üblicherweise werden Mischelemente in Einspritzeinheiten eingesetzt, die dafür sorgen, dass sich die Mischungen, bestehend aus einem nicht eingefärbten Basismaterial und einem eingefärbten, eine hohe Konzentration an Färbemitteln enthaltenden Granulat, möglichst homogen mischen und Bauteile ohne Schlieren auf der Oberfläche erzeugt werden.

Schneckenspritzgussmaschinen und Spritzgusswerkzeuge mit Heißkanal ermöglichen üblicherweise eine gleichmäßige Plastifizierung beziehungsweise Verarbeitung, bei der die einzuspritzende Formmasse homogen durchmischt wird und eine gleichmäßige Temperatur besitzt. Bei der Herstellung von marmorierten Formteilen wird zwar eine gleichmäßige Temperatur angestrebt, die homogene Durchmischung der einzuspritzenden Formmassen ist jedoch unerwünscht, so dass noch wechselnde farbliche Komponenten im Fertigteil sichtbar bleiben.

Gerade zur Herstellung von reproduzierbaren Marmorierungsmustern, bei denen eine gleichförmige Wiederholung des Farbverlaufs und der Farbverteilung angestrebt wird, werden üblicherweise Maschinen eingesetzt, in denen mindestens zwei die Marmorierung erzeugende Komponenten getrennt, beispielsweise auf zwei separaten Spritzeinheiten, dem Spritzgusswerkzeug zugeführt werden.

Zur Herstellung von marmorierten Formteilen sind ferner Vorrichtungen bekannt, insbesondere Düsen, die es ermöglichen, Formmassen aus zwei getrennten Einspritzeinheiten in einem Spritzgusswerkzeug zu vereinen.

Die Herstellung von reproduzierbar marmorierten Formteilen in Zwei-Komponenten-Spritzgussmaschinen ist aufwendig, da zwei Spritzeinheiten benötigt werden und betrieben werden müssen, die jeweils eine Schnecke, einen Zylinder, Zuführvorrichtungen und entsprechende Hydraulik zur Bewegung der Schnecke aufweisen.

Die Formmassen werden aus der Schneckenspritzgussmaschine in das Spritzgusswerkzeug eingespritzt, das einen Heißkanal oder auch ein Heißkanalsystem mit mehreren parallelen Schmelzekanälen, die zu entsprechend mehreren Kavitäten führen, umfassen kann.

Als Heißkanal oder Heißkanalsystem wird bei der Verarbeitung von Kunststoffen, insbesondere beim maschinellen Spritzgießen von Thermoplasten, eine besondere Bauart des Angusssystems bezeichnet. Der Heißkanal ist gegenüber weiteren Bauteilen des Spritzgusswerkzeugs thermisch isoliert und kann separat, insbesondere separat von den weiteren Bauteilen des Spritzgusswerkzeugs, temperiert werden.

Bei Spritzgusswerkzeugen, die keinen Heißkanal umfassen, ist das Angusssystem nicht thermisch von den weiteren Teilen des Spritzgusswerkzeugs isoliert. Daher ist hier sowohl das Spritzgusswerkzeug als auch das darin befindliche Angusssystem, wie beispielsweise ein Kegelanguss, ein Bandanguss oder ein Tunnelanguss auf Temperaturen unterhalb einer Schmelztemperatur der Formmassen temperiert. Durch diese niedrigen Temperaturen erstarren die Formmassen bereits im Angusssystem während der Herstellung des Formteils. Auf diese Weise entsteht ein Anguss, also ein Fortsatz des Formteils, der nicht zur gewünschten Geometrie des Formteils gehört und der in einem zusätzlichen Arbeitsschritt vom hergestellten Formteil getrennt werden muss. Die Entfernung des Angusses kann durch zusätzliche Funktionselemente im Spritzgusswerkzeug oder nach der Herstellung des Formteils manuell oder maschinell erfolgen. Durch die Abtrennung des Angusses kann eine Markierung oder Fehlstelle am Formteil verbleiben, die erkennen lässt, an welcher Stelle der Anguss angeordnet war.

Weiterhin verbleibt bei einem Angusssystem ohne Heißkanal ein Teil der in das Spritzgusswerkzeug eingespritzten Formmasse im Angusssystem und fließt nicht in das Formteil ein. Der verbleibende Teil der Formmassen muss rezykliert oder entsorgt werden und das Schussvolumen wird durch den verbleibenden Anguss erhöht, da mehr Formmasse plastifiziert werden muss als im fertigen Formteil enthalten ist. Dies führt zu energetischen Nachteilen sowie Nachteilen bezüglich der Dimensionierung der Spritzgussmaschine.

Im Gegensatz dazu bleiben die Formmassen in einem Spritzgusswerkzeug mit Heißkanal fließfähig und es findet kein Erstarren der Formmassen im Angusssystem statt, so dass kein Anguss am Formteil verbleibt. Weiterhin ermöglicht ein Heißkanal längere Fließwege in dem Spritzgusswerkzeug, da ein Druckverlust durch ein Abkühlen der Formmassen und einer damit verbundenen Viskositätserhöhung vermieden wird.

Der Heißkanal weist üblicherweise eine Heißkanaldüse auf, die an dem Einlass in die Kavität angeordnet ist und den Übergang zwischen beheizter und unbeheizter Zone, die die Kavität umfasst, in dem Spritzgusswerkzeug darstellt. Die Heißkanaldüse stellt also die Abgrenzung zwischen den flüssigen Formmassen und den sich verfestigenden Formmassen dar.

Ein Heißkanal kann als offenes System oder geschlossenes System ausgeführt sein. Bei einem geschlossenen System kann der Anspritzpunkt, also der Ausgang der Heißkanaldüse, verschlossen werden. Dazu weist der Heißkanal weitere Bauteile als Verschlusselemente auf. Das Verschlusselement ist üblicherweise eine Verschlussnadel, die durch eine separat ansteuerbare Mechanik, die pneumatisch, hydraulisch oder elektrisch betreibbar ist, positioniert werden kann und beweglich ist.

DE 197 30 380 A1 offenbart ein Verfahren zur Führung von Schmelzemassen in einer Einspritzdüse einer Kunststoffspritzgießform. Die Dokumente FR 2 482 899 und US 4,303,382 beschreiben eine Nadelverschlussdüse eines Heißkanalsystems. Dokument WO 2019/145877 A1 betrifft eine Düsenspitze eines Heißkanalsystems.

WO 2004/098759 A1 beschreibt eine Spritzgussvorrichtung mit einem Kanalsystem, das einen statischen Mischer umfasst. Der statische Mischer weist eine Vielzahl von Durchgängen und Mischportalen auf, um einen homogenen Strom von Formmassen zu erzeugen.

CA 2 861 399 ist auf eine Spritzgussmaschine gerichtet, die eine Verteilerplatte umfasst und eine Düse, die sich durch die Verteilerplatte erstreckt. Die Verteilerplatte und die Düse sind Teil einer Heißkanalanordnung.

WO 2013/122789 A1 offenbart ein Formwerkzeugsystem mit einem Stiftführungsmechanismus, der die Bewegung eines Stiftes in einer Austrittsöffnung einer Düse ermöglicht. Die Wand des Schmelzekanals in einer Düse weist Vorsprünge auf, die zur Führung des Stiftes dienen.

WO 2011/156436 A1 ist auf ein Formwerkzeugsystem gerichtet, das ein Düsengehäuse sowie einen Ventilschaft umfasst. In einer Düsenspitze ist eine Nutenstruktur angeordnet, die den Ventilschaft umgibt, wenn sich der Ventilschaft in einer vorderen Position befindet. Die Führung des Ventilschafts ist in die Düsenspitze integriert, wobei gleichzeitig der Ventilschaft geführt wird und Durchlässe für die Formmasse zur Verfügung stehen.

US 6,245,278 B1 beschreibt eine Einspritzdüse umfassend einen Längskanal und eine Vielzahl von abgewinkelten Kanälen, die von dem Längskanal abzweigen. Durch entstehende Verwirbelungen soll ein Spülen verbessert und ein Farbwechsel bezüglich der Formmassen beschleunigt werden.

WO 2012/051079 A1 betrifft ein Formwerkzeugsystem mit einer Düsenspitze, wobei eine Außenfläche der Düsenspitze mehrere Auslässe besitzt, so dass sich Schmelzeströme entlang der Außenfläche überschneiden. Hierdurch werden Bindenähte reduziert und die Spannrissbeständigkeit des hergestellten Bauteils verbessert.

WO 2014/133702 A1 offenbart einen Heißkanal für eine Spritzgussmaschine umfassend eine Konditionierzone, in der ein im Wesentlichen homogenes thermisches Profil in der verarbeiteten Schmelze erzeugt wird. Es können zum Beispiel Rippen oder Lamellen zur Führung einer Nadel vorgesehen sein.

WO 01/34365 A1 und US 6,089,468 betreffen Schmelzestrommischer für Spritzgussmaschinen.

Ein Strömungskanal, in dem eine Nadel geführt wird, weist eine Spiralnut auf. Die Tiefe der Spiralnut nimmt in Richtung der Auslasszone ab, so dass ein Harzstrom durch die Spiralnut wendelförmig und in Richtung der Auslasszone zunehmend axial über Stege der Spiralnut fließt. Dadurch werden Schweißlinien im fertigen Produkt eliminiert. Die Spiralnut kann auch als Doppelspiralnut ausgeführt sein, wobei ein innerer Nutabschnitt auf eine Außenfläche eines separaten Torpedos oder eines Ventilschafts ausgeführt ist.

WO 2009/055097 A1 und US 5,405,258 betreffen ein Heißkanal-Düsensystem umfassend einen Torpedo mit verbesserter Austauschbarkeit und zur verbesserten Temperaturverteilung. Ferner ist ein Düsengehäuse beschrieben, das ein Sieb umfasst.

Auch EP 546 554 hat eine Spritzgussvorrichtung mit einer Heißkanaldüse umfassend einen Torpedo zum Gegenstand. Der Torpedo ist durch eine gelötete Verbindung in der Heißkanaldüse befestigt.

Aufgabe der vorliegenden Erfindung ist es, ein Spritzgusswerkzeug und ein Verfahren zur Herstellung von marmorierten Formteilen bereitzustellen, wobei das erzeugte Marmorierungsmuster reproduzierbar und gezielt variierbar ist und gleichzeitig eine hohe Ausprägung und Reproduzierbarkeit des Marmorierungsmusters realisiert wird. Ferner soll die Verwendung desselben Spritzgusswerkzeugs für unterschiedliche Muster mit geringem Modifikationsaufwand und gleichzeitig hoher Reproduzierbarkeit möglich sein.

Gelöst wird diese Aufgabe durch ein Spritzgusswerkzeug nach Anspruch 1, ein Verfahren zur Herstellung eines Spritzgusswerkzeugs nach Anspruch 10, sowie ein Verfahren zur Herstellung von marmorierten Formteilen nach Anspruch 11. Diese beigefügten Ansprüche 1, 10 und 12 definieren die Erfindung.

Die beigefügten abhängigen Ansprüche betreffen Weiterbildungen der Erfindung.

Das Verfahren umfasst weiter bevorzugt die folgenden Schritte:

a) gegebenenfalls Zuführen einer ersten Menge der ersten Formmasse auf die Schnecke, wenn sich die Schnecke in der hinteren Stellung befindet,

b) gegebenenfalls Vorschießen der Schnecke aus der hinteren Stellung in die vordere Stellung,

c) Zuführen einer zweiten Menge der mindestens einen weiteren Formmasse auf die Schnecke,

d) Plastifizieren der ersten Formmasse und der mindestens einen weiteren Formmasse in dem Hohlzylinder der Schnecke, wobei die Schnecke rotiert und zumindest ein Teil der ersten Formmasse und zumindest ein Teil der mindestens einen weiteren Formmasse in einen Freiraum in dem Hohlzylinder zwischen der Düse und der Schneckenspitze gefördert werden und wobei sich die Schnecke von der vorderen Stellung in die hintere Stellung bewegt,

e) Zuführen einer neuen ersten Menge der ersten Formmasse auf die Schnecke, wenn sich die Schnecke in der hinteren Stellung befindet,

f) Einspritzen der ersten Formmasse und der mindestens einen weiteren Formmasse aus dem Freiraum in dem Hohlzylinder in die Kavität des Spritzgusswerkzeugs, wobei die Schnecke aus der hinteren Stellung in die vordere Stellung vorschießt,

q) Abkühlen der ersten Formmasse und der mindestens einen weiteren Formmasse in dem Spritzgusswerkzeug, so dass ein marmoriertes Formteil entsteht,

h) Entfernen des marmorierten Formteils aus dem Spritzgusswerkzeug,

wobei die Schritte c) bis h) wiederholt werden, Schritt e) vor Schritt f) durchgeführt wird und gegebenenfalls Schritt a) vor Schritt b) durchgeführt wird und wobei das Zuführen der neuen ersten Menge der ersten Formmasse in Schritt e) und gegebenenfalls das Zuführen der ersten Menge der ersten Formmasse in Schritt a) zeitlich und/oder räumlich separat von dem Zuführen der zweiten Menge der mindestens einen weiteren Formmasse in Schritt c) durchgeführt wird.

Durch die zeitliche und/oder räumliche Trennung der Zuführung der ersten Formmasse und der mindestens einen weiteren Formmasse wird die Homogenisierung von der ersten Formmasse und der mindestens einen weiteren Formmasse während des Plastifizierens limitiert, so dass definierte Farbgrenzen und reproduzierbare Marmorierungsmuster im hergestellten Formteil sichtbar sind. Die Zugabe der ersten Formmasse und der mindestens einen weiteren Formmasse kann auch als sequentiell oder diskret bezeichnet werden. Entsprechend liegt die erste Formmasse inhomogen verteilt in der mindestens einen weiteren Formmasse vor dem Einspritzen in dem Freiraum zwischen der Düse und der Schneckenspitze vor.

In Abhängigkeit der Geometrie der mindestens zwei Kanäle in dem Heißkanal stellt sich ein definiertes, reproduzierbares, also wiederholt herstellbares Muster auf mindestens einer Sichtfläche des hergestellten marmorierten Formteils ein.

Als reproduzierbare Marmorierungsmuster werden Muster verstanden, deren Abweichungen, wenn unterschiedliche Formteile miteinander verglichen werden, für das menschliche Auge nicht als deutlich unterschiedlich wahrgenommen werden, wenn sie mit demselben Verfahren und derselben Vorrichtung erzeugt wurden. Die mit dem erfindungsgemäßen Verfahren beziehungsweise mit dem erfindungsgemäßen Spritzgusswerkzeug hergestellten Formteile weisen Muster auf, die zuverlässig wiederkehren und erkennbar sind. Dies wird insbesondere durch die definierte Zuführung der Formmassen und die Gestaltung des Heißkanals erzielt.

Die erfindungsgemäß hergestellten marmorierten Formteile sind insbesondere für dekorative Zwecke im Verbrauchsgüterbereich einsetzbar. Die marmorierten Formteile können vollständig marmoriert ausgeführt sein oder mindestens eine marmorierte Sichtfläche umfassen. Die marmorierten Formteile können dreidimensional oder flächig ausgebildet sein. Bevorzugt sind die marmorierten Formteile Haushaltsgegenstände wie Schalen, Teller, Becher, Untersetzer, Griffe oder Toilettensitze, Konsumgüter wie Laptop-Cover oder Schutzhüllen für Telefone oder Smartphones, Spielwaren wie Kreiselscheiben oder Kreisel, Accessoires in der Modebranche wie Knöpfe oder dekorative Elemente im Fahrzeuginnenraum wie Sichtblenden oder Abdeckungen.

Die erste Formmasse und die mindestens eine weitere Formmasse werden dem Hohlzylinder der Einspritzeinheit zugeführt und durch Rotation der Schnecke in Förderrichtung nach vorne zu der Düse der Schneckenspritzgussmaschine hin gefördert. Dabei werden die erste Formmasse und die mindestens eine weitere Formmasse zumindest teilweise, bevorzugt vollständig, plastifiziert. Die mindestens eine weitere Formmasse und gegebenenfalls die erste Formmasse stauen sich in dem Freiraum zwischen der Düse und der Schneckenspitze und schieben die Schnecke axial nach hinten in die hintere Stellung in dem Hohlzylinder. Bevorzugt umfasst die Schneckenspritzgussmaschine genau eine Einspritzeinheit und mehr bevorzugt genau einen Hohlzylinder und weiter bevorzugt genau eine Schnecke.

Das Zuführen kann auch als Dosieren bezeichnet werden, wobei die erste Formmasse beziehungsweise die mindestens eine weitere Formmasse beispielsweise über einen Trichter in den Hohlzylinder und insbesondere auf die Schnecke gelangen. Die erste Formmasse und die mindestens eine weitere Formmasse werden portionsweise zeitlich und/oder räumlich voneinander getrennt zugeführt. Portionsweise bedeutet, dass die erste Formmasse und bevorzugt auch die mindestens eine weitere Formmasse diskontinuierlich in Form von diskreten Portionen, also in Form der ersten Menge beziehungsweise der zweiten Menge, dem Hohlzylinder zugeführt werden.

Das Plastifizieren wird auch als Aufdosieren bezeichnet, wobei die erste Formmasse und die mindestens eine weitere Formmasse in Richtung der Düse von der Schnecke gefördert und dabei zumindest teilweise aufgeschmolzen werden. Bevorzugt werden zumindest ein Teil der ersten Formmasse und zumindest ein Teil der mindestens einen weiteren Formmasse vollständig während des Plastifizierens in Schritt d) aufgeschmolzen.

Das Zuführen der zweiten Menge der mindestens einen weiteren Formmasse in Schritt c) wird bevorzugt nach dem Vorschießen der Schnecke in Schritt b) durchgeführt.

Weiter bevorzugt ist das Zuführen der neuen ersten Menge der ersten Formmasse in Schritt e) und gegebenenfalls das Zuführen der ersten Menge der ersten Formmasse in Schritt a) abgeschlossen, bevor das Vorschießen in Schritt b) beginnt. Weiterhin ist bevorzugt das Vorschießen in Schritt b) abgeschlossen, bevor das Zuführen der zweiten Menge der mindestens einen weiteren Formmasse in Schritt c) beginnt.

Bevorzugt kommt die erste Formmasse erst mit der Schnecke und dann mit der mindestens einen weiteren Formmasse in Kontakt.

Die erste Formmasse und/oder die mindestens eine weitere Formmasse können mit einem Dosiersystem separat direkt in den Hohlzylinder und insbesondere direkt auf die Schnecke zugeführt werden.

Weiter bevorzugt beginnt das Zuführen der zweiten Menge der mindestens einen weiteren Formmasse, wenn sich die Schnecke in der vorderen Stellung befindet. Die Schnecke befindet sich bevorzugt in der vorderen Stellung, wenn sie maximal in Richtung der Düse bewegt wurde.

Die mindestens eine weitere Formmasse, insbesondere die zweite Menge der mindestens einen weiteren Formmasse, kann kontinuierlich zugeführt werden. Bevorzugt wird die zweite Menge der mindestens einen weiteren Formmasse zumindest während des Plastifizierens in Schritt d) kontinuierlich zugeführt.

Insbesondere, wenn die neue erste Menge der ersten Formmasse in Schritt e) und gegebenenfalls die erste Menge der ersten Formmasse in Schritt a) räumlich separat von dem Zuführen der zweiten Menge der mindestens einen weiteren Formmasse in Schritt c) zugeführt werden, kann die zweite Menge der mindestens einen weiteren Formmasse während des Zuführens der neuen ersten Menge der ersten Formmasse in Schritt e) und gegebenenfalls während des Zuführens der ersten Menge der ersten Formmasse in Schritt a) kontinuierlich zugeführt werden.

Wenn die neue erste Menge der ersten Formmasse in Schritt e) und gegebenenfalls die erste Menge der ersten Formmasse in Schritt a) räumlich separat von dem Zuführen der zweiten Menge der mindestens einen weiteren Formmasse in Schritt c) durchgeführt werden, wird die neue erste Menge oder die erste Menge der ersten Formmasse bevorzugt mit einem größeren Abstand zur Düse zugeführt als die zweite Menge der mindestens einen weiteren Formmasse.

Nach dem Plastifizieren wird bevorzugt die Rotation der Schnecke gestoppt, und die Schnecke wird in Förderrichtung nach vorn in die vordere Stellung bewegt, so dass die plastifizierte erste Formmasse und die plastifizierte mindestens eine weitere Formmasse durch die Düse in die Kavität des Spritzgusswerkzeugs gedrückt werden.

Durch das Zuführen der neuen ersten Menge der ersten Formmasse auf die Schnecke, in dem Moment, wenn sich die Schnecke in der hinteren Stellung befindet, wird eine Synchronisation der Musterbildung zum Rhythmus oder Takt des Einspritzvorgangs erreicht und somit die Reproduzierbarkeit des Musters auf nacheinander hergestellten marmorierten Formteilen sichergestellt. Mehr bevorzugt ist die Schnecke in der hinteren Stellung in Ruhe, während die erste Menge der ersten Formmasse zugeführt wird.

Das Volumen der plastifizierten Formmasse umfassend die mindestens eine weitere Formmasse und gegebenenfalls die erste Formmasse, die sich vor dem Einspritzen in dem Freiraum zwischen der Düse und der Schneckenspitze befindet, wird auch als Dosiervolumen bezeichnet, abzüglich eines Massepolsters ergibt sich daraus das Schussvolumen.

Im Anschluss an das Einspritzen in Schritt f) wird der Hohlzylinder wieder befüllt. Die zweite Menge der mindestens einen weiteren Formmasse wird zugeführt, es wird erneut plastifiziert und die Schnecke bewegt sich zurück in die hintere Stellung. Danach wird die erste Menge der ersten Formmasse zugeführt und es wird erneut eingespritzt.

Bevorzugt ist das Plastifizieren bereits mindestens einmal, mehr bevorzugt mindestens zweimal, insbesondere mindestens viermal mit der mindestens einen weiteren Formmasse und gegebenenfalls mit der ersten Formmasse abgeschlossen, wenn die erste Menge der ersten Formmasse in Schritt a) zugeführt wird. Bevorzugt befinden sich bereits die mindestens eine weitere Formmasse und gegebenenfalls die erste Formmasse in dem Hohlzylinder, wenn die erste Menge der ersten Formmasse in Schritt a) zugeführt wird.

Bevorzugt werden die erste Formmasse und/oder die mindestens eine weitere Formmasse einem hinteren Teil des Hohlzylinders zugeführt. Als hinterer Teil werden bevorzugt nicht mehr als 50% einer Gesamtlänge des Hohlzylinders, mehr bevorzugt nicht mehr als 20% einer Gesamtlänge des Hohlzylinders auf einer der Düse der Schneckenspritzgussmaschine abgewandten Seite des Hohlzylinders verstanden. Die erste Formmasse und die mindestens eine weitere Formmasse können dem Hohlzylinder an derselben oder an verschiedenen Positionen beziehungsweise Zuführöffnungen zugeführt werden. Insbesondere werden die erste Formmasse und die mindestens eine weitere Formmasse dem Hohlzylinder an verschiedenen Positionen in derselben Zuführöffnung zugeführt.

Der Hohlzylinder hat in Abhängigkeit des herzustellenden Produktes unterschiedliche innere Durchmesser. Der innere Durchmesser liegt zum Beispiel in einem Bereich von 10 mm bis 150 mm, bevorzugt von 25 mm bis 50 mm, beispielsweise 25 mm oder 30 mm. Die Austrittsöffnung des Hohlzylinders weist zum Beispiel einen Durchgang mit einem Durchmesser von 1,5 bis 10 mm, bevorzugt von 3 bis 6 mm, beispielsweise 5 mm, auf.

Die erste Formmasse und die mindestens eine weitere Formmasse können in Form von Pulvern, Granulaten oder plastischen Massen zugeführt werden. Die erste Formmasse und/oder die mindestens eine weitere Formmasse können jeweils als homogene und/oder heterogene Mischung vorliegen.

Bevorzugt werden die erste Formmasse und/oder die mindestens eine weitere Formmasse als Granulat zugeführt. Als Granulat bezeichnet man im Allgemeinen einen rieselfähigen Feststoff, der beispielsweise zylinderförmig oder linsenförmig ist und bevorzugt eine maximale Länge von 1 mm bis 10 mm, mehr bevorzugt von 3 mm bis 6 mm aufweist.

Bevorzugt umfasst die erste Formmasse ein erstes Granulat, das die erste Polymermasse und das erste Färbemittel enthält. Das erste Granulat kann auch als eingefärbtes Granulat bezeichnet werden, das bevorzugt in einem dem erfindungsgemäßen Verfahren vorgelagerten Schritt hergestellt wird. Die erste Formmasse kann auch als Marmorierungsbatch oder Konzentrat bezeichnet werden.

Insbesondere die mindestens eine weitere Formmasse kann vor der Zuführung eine Mischung umfassen, die mindestens zwei weitere Granulate aufweist, insbesondere ein zweites Granulat und ein drittes Granulat. Die mindestens eine weitere Polymermasse kann in dem zweiten Granulat und das mindestens eine weitere Färbemittel kann in dem dritten Granulat enthalten sein.

Bevorzugt besteht das marmorierte Formteil aus der ersten Formmasse und der mindestens einen weiteren Formmasse.

Die Schnecke der Schneckenspritzgussmaschine weist bevorzugt eine Einzugszone, eine Kompressionszone und eine Meteringzone, die auch als Ausstoßzone oder Homogenisierungszone bezeichnet werden kann, auf.

Bevorzugt ist die Schnecke eine eingängige Schnecke. Die Schnecke weist insbesondere genau einen Gang auf, in dem die erste Formmasse und die mindestens eine weitere Formmasse gefördert werden. Weiter bevorzugt weist die Schnecke der Schneckenspritzgussmaschine einen flachen Schneckengang auf. Die Gangtiefe in der Einzugszone beträgt bevorzugt das 0,05- bis 0,15-fache des äußeren Schneckendurchmessers und die Gangtiefe in der Meteringzone das 0,025- bis 0,075-fache des äußeren Schneckendurchmessers. Ein Kompressionsverhältnis, das ein Verhältnis zwischen einem Gangvolumen der Einzugszone der Schnecke zu einem Gangvolumen der Meteringzone der Schnecke bezeichnet, beträgt bevorzugt mindestens 2, mehr bevorzugt mehr als 2. Bevorzugt weist die Schnecke eine Länge in einem Bereich von dem 20-fachen bis 23-fachen des äußeren Schneckendurchmessers auf. Ein niedriger Schneckengang bietet den Vorteil, dass weniger Material bei gleichem Durchmesser aufgenommen wird.

Die Schnecke der Schneckenspritzgussmaschine kann eine Rückstromsperre umfassen, die bevorzugt zwischen der Schneckenspitze und dem Schneckengang angeordnet ist. Die Schneckenspitze kann Ausbuchtungen, insbesondere 3 bis 4 Ausbuchtungen, aufweisen.

Die Einspritzeinheit der Schneckenspritzgussmaschine umfasst bevorzugt eine Heizvorrichtung. Die Heizvorrichtung kann den Hohlzylinder vollständig, bevorzugt teilweise, umschließen. Auch die Düse der Schneckenspritzgussmaschine kann eine Heizvorrichtung aufweisen. Die Heizvorrichtung unterstützt das Aufschmelzen der ersten Formmasse und der mindestens einen weiteren Formmasse.

Bevorzugt wird das Abkühlen der ersten Formmasse und der mindestens einen weiteren Formmasse in dem Spritzgusswerkzeug in Schritt g) zeitgleich mit dem Plastifizieren der ersten Formmasse und der mindestens einen weiteren Formmasse in dem Hohlzylinder in Schritt d) und gegebenenfalls zumindest teilweise zeitgleich mit dem Zuführen der zweiten Menge der mindestens einen weiteren Formmasse in Schritt c) durchgeführt.

Bevorzugt werden die Schritte c) bis h) mehr als einmal wiederholt, mehr bevorzugt mehr als dreimal, weiter bevorzugt mehr als viermal und insbesondere bevorzugt mehr als fünfmal, um mehrere marmorierte Formteile hintereinander herzustellen. Bevorzugt werden die Schritte a) bis f) in der angegebenen Reihenfolge durchgeführt.

Ferner wird das Einspritzen in Schritt f) bevorzugt mit einer Einspritzfrequenz wiederholt, wobei jedes Einspritzen oder Vorschießen als ein Schuss bezeichnet werden kann. Weiterhin wird das Zuführen der neuen ersten Menge der ersten Formmasse in Schritt e) bevorzugt mit einer Zuführfrequenz wiederholt. Bevorzugt wird die Zuführfrequenz so gewählt, dass sie nicht mehr als 10%, weiter bevorzugt nicht mehr als 5% und insbesondere bevorzugt nicht mehr als 1 %, von der Einspritzfrequenz abweicht. Entsprechend wird das Zuführen der neuen ersten Menge der ersten Formmasse in Schritt e) insbesondere bevorzugt im Takt des Einspritzens in Schritt f) durchgeführt. Hierbei wird das Zuführen der neuen ersten Menge der ersten Formmasse in Schritt e) bevorzugt zeitlich versetzt zum Einspritzen in Schritt f) ausgeführt. Mehr bevorzugt ist die Zuführfrequenz gleich der Einspritzfrequenz. In diesem Fall wird die erste Menge der ersten Formmasse immer im gleichen zeitlichen Versatz zum Einspritzen beziehungsweise Vorstoßen ausgeführt.

Für ein marmoriertes Formteil kann das Zuführen der neuen ersten Menge der ersten Formmasse in Schritt e) und/oder das Zuführen der ersten Menge der ersten Formmasse in Schritt a) vor oder nach dem Zuführen der zweiten Menge der mindestens einen weiteren Formmasse in Schritt c) durchgeführt werden.

Neben der ersten Formmasse können dem Hohlzylinder auch mindestens zwei weitere Formmassen zugeführt werden, wodurch mehrfarbige Formteile erzeugt werden können, die zusätzlich ein Marmorierungsmuster aufweisen. Die mindestens eine weitere Formmasse kann in mehrere Portionen aufgeteilt werden, wobei die mehreren Portionen bevorzugt jeweils sukzessive also schrittweise nacheinander zugeführt werden.

Ferner kann nach dem Einspritzen in Schritt f) ein Nachdruck von der Schnecke der Schneckenspritzgussmaschine auf das Formteil in dem Spritzgusswerkzeug ausgeübt werden. Bevorzugt wird der Nachdruck vor dem Plastifizieren in Schritt d) ausgeübt. Während ein Nachdruck von der Schnecke auf das Formteil in dem Spritzgusswerkzeug ausgeübt wird, befindet sich die Schnecke bevorzugt in der vorderen Stellung im Hohlzylinder oder noch in Bewegung in Förderrichtung, um mehr plastifizierte Formmasse in das Spritzgusswerkzeug zu drücken, so dass Materialschwindungen beim Abkühlen des Formteils in dem Spritzgusswerkzeug ausgeglichen werden.

Bevorzugt wird die zweite Menge der mindestens einen weiteren Formmasse in Schritt c) zugeführt, während der Nachdruck auf das Spritzgusswerkzeug ausgeübt wird. Mehr bevorzugt wird die zweite Menge der mindestens einen weiteren Formmasse in Schritt c) zugeführt, wenn mit der Ausübung des Nachdrucks begonnen wird.

Bevorzugt beträgt ein Verhältnis von einem maximalen inneren freien Volumen des Hohlzylinders, das von der erster Formmasse und der mindestens einen weiteren Formmasse eingenommen werden kann, zu einem inneren Volumen der Kavität nicht mehr als 15, mehr bevorzugt nicht mehr als 10, weiter bevorzugt nicht mehr als 5 und insbesondere von 2 bis 5. Das maximale innere freie Volumen des Hohlzylinders kann auch als Schmelzekanal der Spritzgussmaschine bezeichnet werden.

Bevorzugt ist das innere freie Volumen unterhalb einer Zuführöffnung und insbesondere auf der Schnecke nur zu 0 Vol.-% bis 80 Vol.-%, mehr bevorzugt von 10 Vol.-% bis 50 Vol.-% mit der ersten Formmasse und/oder der mindestens einen weiteren Formmasse beziehungsweise mit dem Granulat der ersten Formmasse und/oder dem Granulat der mindestens einen weiteren Formmasse gefüllt. Dies kann auch als Unterfütterung bezeichnet werden, wobei die erste Formmasse und die mindestens eine weitere Formmasse mit reduziertem Massenstrom zugeführt werden im Vergleich zu einem maximal mit der Schnecke förderbaren Massenstrom.

Entsprechend sind der Hohlzylinder und die Schnecke der Schneckenspritzgussmaschine so ausgelegt, dass sich bevorzugt nicht mehr als 15, mehr bevorzugt nicht mehr als 10, weiter bevorzugt nicht mehr als 5 und insbesondere von 2 bis 5 Schuss, insbesondere vor dem Einspritzen, in der Einspritzeinheit befinden.

Durch ein geringes inneres freies Volumen des Hohlzylinders der Schneckenspritzgussmaschine ergibt sich eine kürzere Verweilzeit für die erste Formmasse und die mindestens eine weitere Formmasse in der Einspritzeinheit, was einer homogenen Durchmischung der ersten Formmasse mit der mindestens einen weiteren Formmasse entgegenwirkt und somit die Erzeugung eines Marmorierungsmusters fördert. Die Verweilzeit der ersten Formmasse und/oder der mindestens einen weiteren Formmasse in dem Hohlzylinder liegt bevorzugt in einem Bereich von 1 Sekunde bis 15 Minuten, mehr bevorzugt von 0,1 Minuten bis 4 Minuten, insbesondere bevorzugt von 0,5 Minuten bis 2 Minuten.

Durch das erfindungsgemäße Verfahren wird die erste Formmasse so spät wie möglich mit der mindestens einen weiteren Formmasse in dem Hohlzylinder in Kontakt gebracht, um das Ausmaß der Durchmischung möglichst zu beschränken. Auch die Reduzierung der Verweilzeit durch ein entsprechendes kleines inneres freies Volumen des Hohlzylinders minimiert die Durchmischung von der ersten Formmasse mit der mindestens einen weiteren Formmasse.

Bevorzugt beträgt ein Verhältnis von der Summe aus der Masse der ersten Menge der ersten Formmasse und der Masse der zweiten Menge der mindestens einen weiteren Formmasse zu der Masse des marmorierten Formteils 0,5 bis 1,5, mehr bevorzugt 0,8 bis 1,2, weiter bevorzugt 0,9 bis 1, insbesondere 1. Dieses Verhältnis ist zum Beispiel größer als 1, wenn bei der Herstellung des marmorierten Formteils mindestens ein Anguss vorliegt, der auch die erste Formmasse und die weitere Formmasse umfasst, aber nach der Herstellung von dem marmorierten Formteil entfernt wird und nicht Teil des marmorierten Formteils ist. Ein Verhältnis von kleiner als 1 kann zum Beispiel vorliegen, wenn Einleger, insbesondere Metalleinleger, in das Formteil integriert werden oder Zwei-Komponenten-Formteile, die unterschiedliche Härten aufweisen können, erzeugt werden, bei denen zunächst eine erste Komponente und dann ein zweite Komponente in die Kavität gespritzt wird, wobei die erste Komponenten und/oder die zweite Komponente eine Marmorierung aufweisen. Durch ein Verhältnis nahe 1 ist die Marmorierung, insbesondere einzelne Elemente des Marmorierungsmuster wie Ringe oder Spitzen, an hintereinander hergestellten marmorierten Formteilen örtlich vergleichbar positioniert, die Reproduzierbarkeit der Marmorierung über verschiedene marmorierte Formteile wird also optimiert, insbesondere, da die spezifischen Massenverhältnisse an die Größe des Formteils und den Rhythmus des Einspritzens angepasst sind. Ein Überdecken verschiedener Muster aus verschiedenen Einspritzvorgängen wird vermieden.

Entsprechend ist bevorzugt, dass jeder Schuss einzeln zugegeben wird, wobei die erste Formmasse für einen Schuss und die mindestens eine weitere Formmasse für denselben Schuss in den räumlich und/oder örtlich getrennten Schritten e) und gegebenenfalls a) beziehungsweise c) zugeführt werden. Die Zugabe der ersten Formmasse und der mindestens einen weiteren Formmasse erfolgt bevorzugt in konkreten Mengen, wobei die erste Menge und die zweite Menge jeweils ausreichend für genau einen Schuss sind.

Bevorzugt beträgt ein Massenverhältnis von der ersten Menge zu der zweiten Menge weniger als 0,1, mehr bevorzugt weniger als 0,01 und insbesondere weniger als 0,001. Die erste Formmasse dient der Ausbildung des Marmorierungsmusters in der mindestens einen weiteren Formmasse, die die Basismasse darstellt.

Ein Verhältnis von einer ersten Konzentration des ersten Färbemittels in der ersten Formmasse zu einer weiteren Konzentration des mindestens einen weiteren Färbemittels in der mindestens einen weiteren Formmasse beträgt bevorzugt mehr als 20, mehr bevorzugt mehr als 50 und insbesondere mehr als 100. Entsprechend ist es bevorzugt, wenn das erste Färbemittel in der ersten Formmasse höher konzentriert ist als das mindestens eine weitere Färbemittel, das gegebenenfalls in der mindestens einen weiteren Formmasse enthalten ist. Die mindestens eine weitere Formmasse kann bereits mit dem mindestens einen weiteren Färbemittel eingefärbt sein, bevor die mindestens eine weitere Formmasse mit der ersten Formmasse in Kontakt kommt.

Bevorzugt enthält die erste Formmasse 10 Gew.-% bis 60 Gew.-%, mehr bevorzugt 20 Gew.-% bis 40 Gew.-%, bezogen auf die erste Formmasse, des ersten Färbemittels. Die mindestens eine weitere Formmasse enthält bevorzugt 0,1 Gew.-% bis 6 Gew.-%, mehr bevorzugt 0,2 Gew.-% bis 4 Gew.-%, bezogen auf die mindestens eine weitere Formmasse, des mindestens einen weiteren Färbemittels.

Durch die genannten Konzentrationsverhältnisse ist eine gute Erkennbarkeit und Schärfe des Marmorierungsmusters gewährleistet, was die Reproduzierbarkeit der Muster unterstützt.

Die zweite Menge kann eine oder mehrere weitere Formmassen umfassen. Bevorzugt sind die erste Polymermasse und/oder die mindestens eine weitere Polymermasse thermoplastische Formmassen. Mehr bevorzugt enthalten die erste Polymermasse und/oder die mindestens eine weitere Polymermasse ein Polymer ausgewählt aus der Gruppe bestehend aus Polypropylen (PP), Polyethylen (PE), Polyoxymethylen (POM), Polyethylenterephthalat (PET), Polybutylenterephthalat (PBT), Polyamid (PA), Polycarbonat (PC), Polyarylethersulfonen (PSU, PESU, PPSU), thermoplastischen Polyurethanen (TPU), Polybutylenadipatterephthalat (PBAT), Polybutylensuccinat (PBS), Polylactid (PLA), Polybutylensebacatterephthalat (PBSeT), Polyethylennaphtalat (PEN), Polyacrylmethacrylat (PMMA), Polystyrol (PS), Styrol enthaltenden Polymeren wie Acrylnitril-Butadien-Styrol-Copolymer (ABS) oder Mischungen davon. Die mindestens eine weitere Formmasse und gegebenenfalls die erste Formmasse können gefüllte oder verstärkte Formmassen sein. Insbesondere können die mindestens eine weitere Formmasse und gegebenenfalls die erste Formmasse mindestens einen Füllstoff wie Talkum, Glaskugeln oder Fasern wie Glasfasern oder Kohlenstofffasern enthalten.

Mehr bevorzugt ist ein in der ersten Polymermasse enthaltenes Polymer auch in der mindestens einen weiteren Polymermasse enthalten. Weiter bevorzugt umfassen die erste Polymermasse und/oder die mindestens eine weitere Polymermasse PBT, mehr bevorzugt umfassen die erste Polymermasse und die mindestens eine weitere Polymermasse PBT.

Das erste Färbemittel und/oder das mindestens eine weitere Färbemittel können in der ersten Formmasse und/oder in der mindestens einen weiteren Formmasse während des Verfahrens löslich oder unlöslich sein. Bevorzugt sind das erste Färbemittel und/oder das mindestens eine weitere Färbemittel Farbpigmente. Bevorzugt ist das erste Färbemittel ein schwarzes Färbemittel. Das erste Färbemittel umfasst bevorzugt Ruß wie Industrieruß, der auch als Carbon Black bezeichnet wird, oder eine Diaminophenazin-Verbindung wie Nigrosin. Mehr bevorzugt besteht das erste Färbemittel aus Ruß wie Carbon Black oder mindestens einer Diaminophenazin-Verbindung wie Nigrosin. Das mindestens eine weitere Färbemittel ist bevorzugt ein blaues Färbemittel, grünes Färbemittel, gelbes Färbemittel, rotes Färbemittel, beiges Färbemittel, oranges Färbemittel, weißes Färbemittel, graues Färbemittel, braunes Färbemittel oder goldenes Färbemittel.

Werden dem Hohlzylinder neben der ersten Formmasse mindestens zwei weitere Formmassen zugeführt, kann jede weitere Formmasse jeweils eine weitere Polymermasse und gegebenenfalls mindestens ein weiteres Färbemittel enthalten. Die weiteren Formmassen können zusammen mit oder zeitlich vor oder nach, gegebenenfalls direkt vor oder direkt nach der mindestens einen weiteren Formmasse dem Hohlzylinder zugegeben werden. Die mindestens zwei weiteren Formmasse können auch kontinuierlich zugeführt werden.

Die Viskosität der ersten Formmasse und/oder der mindestens einen weiteren Formmasse, jeweils in plastifizierter Form, liegt bevorzugt in einem Bereich von 50 Pa.s bis 1000 Pa.s. Die Einspritzgeschwindigkeit der plastifizierten Formmassen von der Düse der Schneckenspritzgussmaschine in das Spritzgusswerkzeug beträgt bevorzugt mehr als 25 cm³/s, mehr bevorzugt von 50 cm³/s bis 100 cm³/s, insbesondere von 60 cm³/s bis 80 cm³/s, zum Beispiel 70 cm³/s. Der Staudruck, der üblicherweise den Druck in dem Freiraum in dem Hohlzylinder bezeichnet, beträgt bevorzugt 1 bar bis 100 bar, mehr bevorzugt 10 bar bis 70 bar und weiter bevorzugt 20 bar bis 50 bar.

An dem Spritzgusswerkzeug ist die Eintrittsöffnung auf einer Seite des Spritzgusswerkzeugs angeordnet, die der Austrittsöffnung der Düse der Einspritzeinheit zugewandt ist, so dass die plastifizierte Formmasse, insbesondere die erste Formmasse und die mindestens eine weitere Formmasse, von der Düse der Einspritzeinheit durch die Eintrittsöffnung in das Spritzgusswerkzeug gedrückt werden kann. Von der Eintrittsöffnung kann die plastifizierte Formmasse in dem Spritzgusswerkzeug durch die mindestens zwei Kanäle zum Einlass und durch den Einlass in die Kavität gedrückt werden. Die plastifizierte Formmasse wird in Förderrichtung nach der Eintrittsöffnung auf die mindestens zwei Kanäle aufgeteilt und vor dem Einlass in die Kavität wieder zusammengeführt.

Mehr bevorzugt weist das Spritzgusswerkzeug genau eine Eintrittsöffnung für genau eine Einspritzeinheit auf. Das Spritzgusswerkzeug kann mehr als eine Kavität und jeweils einen Einlass in jede Kavität umfassen. Wenn das Spritzgusswerkzeug mehr als einen Einlass aufweist, besitzt das Spritzgusswerkzeug bevorzugt pro Einlass die mindestens zwei Kanäle oder besitzt pro Einlass einen Einsatz umfassend die mindestens zwei Kanäle.

In dem Spritzgusswerkzeug sind im Rahmen der Erfindung die mindestens zwei Kanäle in demselben Heißkanal, insbesondere in demselben Schmelzekanal des Heißkanals, angeordnet. Wenn ein Heißkanalsystem einen Heißkanalverteiler mit mehr als einem Schmelzekanal aufweist, liegen entsprechend pro Schmelzekanal des Heißkanals, bevorzugt pro jeder Heißkanaldüse, die mindestens zwei Kanäle vor. Mit dem Begriff Heißkanal wird im Rahmen der Erfindung jeweils auf ein und denselben Schmelzekanal des Heißkanals beziehungsweise auf ein und denselben Abschnitt oder Arm eines Heißkanalsystems verwiesen.

Bevorzugt sind die mindestens zwei Kanäle mit dem ersten Ende jeden Kanals mit demselben Einlass in dieselbe Kavität verbunden. Die mindestens zwei Kanäle sind weiter bevorzugt mit dem zweiten Ende jeden Kanals mit der Eintrittsöffnung in das Spritzgusswerkzeug und mit der Spritzgussmaschine verbunden. "Verbunden sein" ist in diesem Zusammenhang als fluidisch verbunden sein zu verstehen, was auch als "kommunizieren" bezeichnet werden kann.

Die mindestens zwei Kanäle sind bevorzugt zwischen ihrem ersten Ende und ihrem zweiten Ende voneinander getrennt, insbesondere durch das eine einstückig ausgeführte Bauteil. Das eine einstückig ausgeführte Bauteil ist bevorzugt ein starres Bauteil. Mehr bevorzugt sind die mindestens zwei Kanäle zwischen ihrem ersten Ende und ihrem zweiten Ende vollständig voneinander getrennt.

Insbesondere münden die mindestens zwei Kanäle jeweils separat mit ihrem ersten Ende in eine erste Endfläche in dem Heißkanal und mit ihrem zweiten Ende in eine zweite Endfläche in dem Heißkanal. Die erste Endfläche ist mit einem kleineren Abstand von dem jeweiligen Einlass in die Kavität angeordnet als die zweite Endfläche und die zweite Endfläche ist mit einem kleineren Abstand von der Eintrittsöffnung in das Spritzgusswerkzeug angeordnet als die erste Endfläche. Bevorzugt beginnen die mindestens zwei Kanäle in Förderrichtung entsprechend an der zweiten Endfläche und enden an der ersten Endfläche. Die erste Endfläche und/oder die zweite Endfläche sind bevorzugt Ebenen. Ferner können die erste Endfläche und/oder die zweite Endfläche Elemente einer Verdrehsicherung wie eine Nut-Feder Verbindung oder eine Passfeder aufweisen. Weiterhin schließen die Ebenen der ersten Endfläche und der zweiten Endfläche bevorzugt einen Winkel von kleiner als 30°, weiter bevorzugt kleiner als 10° und insbesondere kleiner als 5° ein, so das die erste Endfläche und die zweite Endfläche zueinander im Wesentlichen parallel in dem Heißkanal angeordnet sind.

Ferner sind die erste Endfläche und/oder die zweite Endfläche bevorzugt im Wesentlichen senkrecht zur Förderrichtung beziehungsweise zu einer Heißkanallängsachse angeordnet. Im Wesentlichen senkrecht bedeutet in einem Winkel in einem Bereich von 45° bis 135°, mehr bevorzugt von 70° bis 110° und insbesondere von 80° bis 100°, zum Beispiel 90°.

Die mindestens zwei Kanäle sind bevorzugt in einem Abstand von dem Einlass, also der Spitze, der Heißkanaldüse, angeordnet, wobei der Abstand bevorzugt das Einfache bis 1,5-fache des Heißkanaldüsendurchmessers am Einlass beträgt. Der Abstand liegt zum Beispiel in einem Bereich von 10 mm bis 15 mm, wenn der Heißkanaldüsendurchmesser am Einlass 8 mm beträgt.

Ein Abschnitt des Heißkanals, der von der ersten Endfläche und der zweiten Endfläche begrenzt ist, kann auch als Kanalabschnitt des Heißkanals bezeichnet werden. Entsprechend findet in dem Kanalabschnitt des Heißkanals kein Austausch von plastifizierter Formmasse zwischen den mindestens zwei Kanälen statt. Die plastifizierte Formmasse, die die erste Formmasse und gegebenenfalls die mindestens eine weitere Formmasse umfasst, wird gesplittet und in mindestens zwei separaten Strömen jeweils durch die mindestens zwei Kanäle gedrückt. Insbesondere weisen die mindestens zwei Kanäle zwischen ihrem ersten Ende und ihrem zweiten Ende keine Durchgänge und/oder Durchlässe zueinander auf. Entsprechend findet zwischen den mindestens zwei Kanälen keine Durchmischung der mindestens zwei separaten Ströme statt. Insbesondere dienen die mindestens zwei Kanäle der Verminderung einer Vermischung des Gesamtstroms der plastifizierten Formmasse. Die zwei getrennten Kanäle wirken also einer homogenen Durchmischung der ersten Formmasse mit der weiteren Formmasse entgegen, so dass die Reproduzierbarkeit unterstützt wird.

Gemäß dem erfindungsgemäßen Verfahren können die mindestens zwei Kanäle jeweils insbesondere mindestens teilweise eine Spirale bilden beziehungsweise auf einer gekrümmten Bahn verlaufen und/oder gerade verlaufen. Wenn die mindestens zwei Kanäle in dem Verfahren gerade durch den Heißkanal verlaufen, können die mindestens zwei Kanäle auch als gerade Bohrungen bezeichnet werden. Dabei verlaufen die mindestens zwei Kanäle bevorzugt parallel zu der Heißkanallängsachse. Ein Verlauf der mindestens zwei geraden Kanäle, wobei diese im Verhältnis zu der Heißkanallängsachse geneigt verlaufen, ist auch möglich. Durch die Neigung wird ein leichter Drall auf die plastifizierten Formmassen aufgeprägt.

In dem erfindungsgemäßen Spritzgusswerkzeug bilden die mindestens zwei Kanäle jeweils mindestens teilweise eine Spirale. Unter einer Spirale wird im Rahmen der Erfindung eine dreidimensionale Spirale verstanden, die auch als Schraubenlinie bezeichnet werden kann.

Durch die mittels der mindestens zwei Kanäle jeweils gebildete Spirale wird ein Drall auf die plastifizierte Formmasse aufgeprägt, der sich in dem Marmorierungsmuster des hergestellten Formteils widerspiegelt.

Insbesondere weisen die mindestens zwei Kanäle jeweils eine Mittelachse auf, wobei die Mittelachse des jeweiligen Kanals in Form der Spirale um die Heißkanallängsachse angeordnet ist.

Weiter bevorzugt sind die Mittelachsen der mindestens zwei Kanäle an jeder Position mit gleichem Abstand zueinander und weiter bevorzugt auch mit gleichem Abstand von der Heißkanallängsachse angeordnet. Alternativ kann der Abstand der Mittelachsen der mindestens zwei Kanäle zueinander auch variieren und in der Förderrichtung zunehmen oder abnehmen. Die Mittelachse verläuft jeweils durch die Flächenschwerpunkte der Querschnittsflächen des jeweiligen Kanals.

Die Spirale kann in Förderrichtung rechtsdrehend oder linksdrehend ausgeführt sein.

Bevorzugt weisen die Spiralen, die jeweils von einem der mindestens zwei Kanäle gebildet werden, die gleiche Geometrie, wie Steigung und Anzahl an Windungen, auf, und sind zueinander um einen radialen Winkel bezüglich der Heißkanallängsachse versetzt angeordnet. Als Steigung wird insbesondere der Steigungswinkel angegeben, der zum Beispiel bei konstanter Steigung und konstantem Durchmesser wie folgt definiert ist:

$$\alpha = arctan\left(\frac{S}{\pi \cdot D}\right),$$

mit $\alpha$: Steigungswinkel, S: Weg in Richtung der Heißkanallängsachse, der bei einer vollständigen Windung zurückgelegt wird und auch als Ganghöhe bezeichnet werden kann, und D: Durchmesser der Spirale.

Bevorzugt weist die Spirale an mindestens einer Position eine Steigung von weniger als 70° auf.

Die Spirale, die jeweils von einem der mindestens zwei Kanäle gebildet wird, kann eine konstante Steigung besitzen. Die konstante Steigung liegt bevorzugt in einem Bereich von 5° bis weniger als 60°, weiter bevorzugt von 10° bis 40° und insbesondere bevorzugt von 15° bis 30°. Zum Beispiel beträgt die konstante Steigung 20°.

Bevorzugt weist die Spirale an mindestens zwei unterschiedlichen Positionen jeweils unterschiedliche Steigungen auf. Die mindestens zwei unterschiedlichen Positionen auf der Spirale haben bevorzugt einen unterschiedlichen Abstand von dem Einlass in die Kavität. Bevorzugt unterscheidet sich eine erste Steigung der Spirale an einer ersten Position von einer zweiten Steigung der Spirale an einer zweiten Position um mindestens 20°, bevorzugt beträgt eine Differenz, insbesondere eine maximale Differenz, von der ersten Steigung und der zweiten Steigung mehr als 30° und weniger als 90°, zum Beispiel 60°.

Bevorzugt nimmt die Steigung der Spirale in einer Richtung von der Eintrittsöffnung zu dem Einlass ab. So kann sich die Steigung der Spirale beispielsweise in Förderrichtung der plastifizierten Formmasse von einer ersten Position zum Beispiel an der zweiten Endfläche, in relativer Nähe zur Eintrittsöffnung, von größer als 70° zu einer zweiten Position an der ersten Endfläche, nahe der Kavität, von weniger als 30° verändern. Die Änderung, insbesondere die kontinuierliche Änderung, von einer steilen Steigung zu einer flachen Steigung in Förderrichtung der plastifizierten Formmasse ermöglicht einen strömungsgünstigen Einlauf und gleichzeitig die Aufbringung eines starken Dralls am Auslauf aus den mindestens zwei Kanälen.

Bevorzugt weist die Spirale eine Anzahl von Windungen, die auch als Umdrehungen bezeichnet werden können, auf und weiter bevorzugt liegt die Anzahl der Windungen in einem Bereich von mehr als 0,25 bis 5. Entsprechend legt die Spirale bevorzugt einen Drehwinkel von mehr als 90° bis 1800° zurück. Weiter bevorzugt liegt die Anzahl der Windungen in einem Bereich von mehr als 0,25 bis 3, insbesondere in einem Bereich von mehr als 0,50 bis 3, zum Beispiel in einem Bereich von 0,51 bis 2.

Bevorzugt weist der Heißkanal, insbesondere pro Schmelzekanal, zwei bis acht, mehr bevorzugt drei bis acht, weiter bevorzugt drei bis sechs, zum Beispiel drei, vier oder sechs Kanäle, die auch als Löcher, Durchgänge oder Bohrungen bezeichnet werden können, auf.

Form, Anzahl und Anordnung der mindestens zwei Kanäle nehmen Einfluss auf die Geometrie des erzeugten Marmorierungsmusters. Die mindestens zwei Kanäle können verschiedene Querschnittsgeometrien und/oder verschiedene Querschnittsgrößen aufweisen. Bevorzugt weisen die mindestens zwei Kanäle pro Heißkanal die gleiche Querschnittsgeometrie und die gleiche Querschnittsgröße auf.

Wenn die mindestens zwei Kanäle jeweils mindestens teilweise eine Spirale bilden, können die mindestens zwei Kanäle zum Beispiel jeweils als Schneckengang oder gewundene Bohrung, die auch als gekrümmte Bohrung bezeichnet werden kann, ausgeführt sein.

Sind die mindestens zwei Kanäle als Schneckengang ausgeführt, kann ein Teil des einstückig ausgeführten Bauteils, der die mindestens zwei Kanäle voneinander trennt, mehrere Flügel bilden. Insbesondere ist die Anzahl an Flügeln gleich der Anzahl der mindestens zwei Kanäle, die in diesem Fall im Querschnitt durch einen Steg voneinander getrennt sind. Die Ausführung der mindestens zwei Kanäle jeweils als Schneckengang kann auch so beschrieben werden, dass in einer zylindrischen Fließkanalbohrung ein mehrflügeliger Steg angeordnet ist, der entlang der, bevorzugt zentralen, Heißkanallängsachse in radialer Richtung gedreht wird. Weiter bevorzugt sind die mindestens zwei Kanäle durch zwei konzentrisch angeordnete Zylinder, die jeweils Teile der jeweiligen Mantelfläche darstellen, begrenzt. Insbesondere sind die mindestens zwei Kanäle durch dieselben zwei konzentrisch angeordneten Zylinder begrenzt.

Bevorzugt weisen die mindestens zwei Kanäle in einem radialen Querschnitt des Heißkanals jeweils eine runde, ellipsoide, ringsegmentförmige oder mehreckige wie hexagonale oder dreieckige Querschnittsfläche auf. Die dreieckige Querschnittsfläche kann mindestens eine gekrümmte Seitenlinie aufweisen. Eine dreieckige Querschnittsfläche mit mindestens einer gekrümmten Seitenlinie oder eine ringsegmentförmige Querschnittsfläche liegt bevorzugt bei der Ausführung der mindestens zwei Kanäle als jeweils ein Schneckengang vor. Das Ringsegment deckt bevorzugt einen Winkel in einem Bereich von 100° bis 180° ab. Insbesondere wenn die Anzahl der mindestens zwei Kanäle mindestens vier beträgt kann der Winkel des Ringsegments kleiner als 100° sein. Weisen die Kanäle einen dreieckigen Querschnitt auf und sind Zwischenwände zwischen den mindestens zwei Kanälen als Schneckengang ausgeführt, so kann dies auch so beschrieben werden, dass der Heißkanal eine zylinderförmige zentrale Schmelzekanalbohrung aufweist, in dem eine Spindel, die den Flügeln entspricht, angeordnet ist, die die mindestens zwei Kanäle voneinander trennt. Sind die mindestens zwei Kanäle jeweils als gewundene Bohrung ausgeführt, weisen die mindestens zwei Kanäle bevorzugt jeweils eine runde, ellipsoide oder mehreckige wie hexagonale Querschnittsfläche auf.

Die Querschnittsfläche des Kanalabschnitts des Heißkanals, in dem die mindestens zwei Kanäle angeordnet sind, weist bevorzugt ein Öffnungsverhältnis auf, das das Verhältnis von durchströmbarer Fläche zur Gesamtfläche darstellt und 40% bis 80%, weiter bevorzugt 50% bis 75% beträgt. Die Berechnung des Öffnungsverhältnisses basiert bevorzugt auf einer, insbesondere runden, Querschnittsfläche, deren Radius dem maximalen Abstand einer Wand der mindestens zwei Kanäle von der zentralen Heißkanallängsachse entspricht. Das Öffnungsverhältnis kann zum Beispiel 68% betragen im Fall von zwei Kanälen, die jeweils eine Spirale in Form eines Schneckengangs mit variabler Steigung von 90° bis 30° bilden und 51% im Fall von drei Kanälen, die jeweils eine Spirale in Form eines Schneckengangs mit variabler Steigung von 90° bis 30° bilden. Bevorzugt sind die durchströmbaren Flächen in der ersten Endfläche und in der zweiten Endfläche in die mindestens zwei Kanäle beziehungsweise aus den mindestens zwei Kanälen im Wesentlichen gleich groß. Entsprechend weichen die Eintrittsflächen und die Austrittsflächen der mindestens zwei Kanäle bevorzugt um weniger als 30%, mehr bevorzugt um weniger als 10% und insbesondere bevorzugt um weniger als 5% voneinander ab, jeweils bezogen auf die Eintrittsfläche. Dies betrifft die einzelnen der mindestens zwei Kanäle sowie die Summe der Eintrittsflächen beziehungsweise Austrittsflächen der mindestens zwei Kanäle.

Der Heißkanal, insbesondere der Kanalabschnitt des Heißkanals, kann einstückig oder mehrstückig ausgeführt sein. Bei der mehrstückigen Ausführungsform stellt das einstückig ausgeführte Bauteil die unmittelbare Begrenzung der mindestens zwei Kanäle dar. Das einstückig ausgeführte Bauteil kann durch einen Teil oder Abschnitt des Heißkanals gebildet werden, insbesondere kann der Kanalabschnitt oder ein Teil des Kanalabschnitts des Heißkanals einstückig ausgeführt sein und das einstückig ausgeführte Bauteil sein. Alternativ kann in dem Kanalabschnitt der Einsatz als einstückig ausgeführtes Bauteil aufgenommen sein. Ferner können die mindestens zwei Kanäle zum Beispiel direkt in einer einstückig ausgeführten Heißkanaldüsenkappe angeordnet sein, die auch als Einschraubteil bezeichnet werden kann.

Insbesondere sind Mantelflächen, bevorzugt alle Mantelflächen, der mindestens zwei Kanäle, die bevorzugt vollständig geschlossen sind, von dem einen einstückig ausgeführten Bauteil begrenzt. Die erste Endfläche und die zweite Endfläche sind im Querschnitt der mindestens zwei Kanäle frei von Material des einen einstückig ausgeführten Bauteils, so dass die plastifizierte Formmasse durch die erste Endfläche und die zweite Endfläche hindurchtreten kann.

Das eine einstückig ausgeführte Bauteil kann ein Teil des Heißkanals, insbesondere der Einsatz sein. Einstückig ausgeführt wird insbesondere dahingehend verstanden, dass das eine einstückig ausgeführte Bauteil aus einem kontinuierlichen Material hergestellt ist und insbesondere keine Verbindungen, zum Beispiel Schweißnähte und/oder Lötnähte, aufweist. So können zum Beispiel die Wände der mindestens zwei Kanäle, insbesondere, wenn diese als Flügel ausgeführt sind, an eine hohlzylindrische Grundform des Einsatzes oder an einen zentral angeordneten vollzylindrischen Teil des Einsatzes angeformt sein. Unter einem kontinuierlichen Material wird ein Material verstanden, das über das gesamte einstückig ausgeführte Bauteil eine homogene Zusammensetzung aufweist. Das eine einstückig ausgeführte Bauteil ist insbesondere nicht aus mehreren Schichten oder mehreren Bauteilen zusammengesetzt und/oder weist keine Beschichtungen aus einem weiteren Material auf.

Durch die Verwendung des einen einstückig ausgeführten Bauteils, das insbesondere mittels eines additiven Verfahrens hergestellt wird, ist eine vereinfachte Herstellung des Spritzgusswerkzeugs möglich.

Bevorzugt umfasst der Heißkanal den Einsatz als einstückig ausgeführtes Bauteil, der bevorzugt eine zylinderförmige Außenkontur aufweist. Insbesondere sind die mindestens zwei Kanäle in dem Einsatz angeordnet. Entsprechend kann ein Heißkanal mit wechselnden Einsätzen, die Kanäle mit jeweils unterschiedlichen Geometrien aufweisen, verwendet werden, was eine hohe Flexibilität bei der Gestaltung der Marmorierungsmuster mit nur einem Spritzgusswerkzeug ermöglicht. Durch Verwendung des Einsatzes können unterschiedliche Marmorierungsmuster in schneller Abfolge mittels des gleichen Spritzgusswerkzeugs hergestellt werden. Die verschiedenen Einsätze können je nach Bedarf in dem Heißkanal ausgetauscht werden. Der Einsatz ist bevorzugt passgenau mit einer bevorzugt zentralen zylinderförmigen Bohrung, insbesondere dem Schmelzekanal, in dem Heißkanal, die den eigentlichen Fließkanal außerhalb des Einsatzes bildet, ausgeführt.

Bevorzugt beträgt ein Verhältnis von Länge zu Durchmesser des Einsatzes von 4:1 bis 1:1, zum Beispiel 2:1, und ein Verhältnis von Länge zu Durchmesser der mindesten zwei Kanäle jeweils von 20:1 bis 2:1, weiter bevorzugt von 10:1 bis 8:1. Eine Wanddicke zwischen den mindestens zwei Kanälen, insbesondere eine Dicke der Flügel oder des Stegs, beträgt bevorzugt 10% bis 30%, weiter bevorzugt 15% bis 20%, bezogen auf den Durchmesser eines der mindestens zwei Kanäle.

Neben dem Einsatz kann der Heißkanal eine, zwei oder mehrere Scheiben aufweisen, die zur Positionierung und/oder Fixierung des Einsatzes in dem Heißkanal dienen können. Besonders bevorzugt ist der Einsatz zwischen zwei Scheiben angeordnet. Die Scheiben weisen bevorzugt eine zentrale Bohrung auf.

Weiterhin wird ein Verfahren zur Herstellung des erfindungsgemäßen Spritzgusswerkzeugs vorgeschlagen, wobei zumindest ein Teil des Heißkanals, bevorzugt das eine einstückig ausgeführte Bauteil, insbesondere zumindest der Einsatz mit einem additiven Verfahren, insbesondere mittels 3D-Druck, hergestellt wird. Die Herstellung der mindestens zwei Kanäle mit einem additiven Verfahren ermöglicht, dass Kanäle mit komplexeren, insbesondere komplexeren spiralförmigen Verläufen, hergestellt werden können. Ferner führt diese Art der Herstellung ähnlich wie bei Gussbauteilen zu einer Oberflächenrauhigkeit, die einen positiven Effekt auf die Marmorierungsmuster hat. Bevorzugt werden mit dem additiven Verfahren Schichten mit einer Schichthöhe von jeweils 0,08 mm bis 0,2 mm, zum Beispiel 0,1 mm, erzeugt.

Ferner ist es durch die Herstellung des einen einstückig ausgeführten Bauteils, insbesondere des Einsatzes, mittels des additiven Verfahrens möglich, einen Hinterschnitt zu erzeugen, um eine größere durchströmbare Fläche der mindestens zwei Kanäle zu erzielen. Unter dem Hinterschnitt wird im Rahmen der Erfindung verstanden, dass ein Durchmesser eines Einsatzschmelzekanals in Förderrichtung zunimmt. Insbesondere kann ein zentral angeordneter Einsatzschmelzekanal, der an der zweiten Endfläche angeordnet ist, einen Durchmesser aufweisen, der in Förderrichtung zunimmt.

Durch das additive Verfahren ist es weiterhin möglich Kanäle herzustellen, wobei die mindestens zwei Kanäle einen Hinterschnitt und insbesondere jeweils mehr als 0,5 Windungen aufweisen. Unter einem Hinterschnitt ist bezüglich der mindestens zwei Kanäle insbesondere zu verstehen, dass die Querschnittsflächen eines Kanals an der ersten Endfläche und an der zweiten Endfläche in axialer Projektion keine Überschneidung haben.

Als additive Verfahren können Laserschweißverfahren oder Schmelzschichtungsverfahren wie Fused Deposition Modeling (FDM) oder Fused Filament Fabrication (FFF) eingesetzt werden. Zur Herstellung des einstückigen Bauteils, insbesondere des Einsatzes, kann insbesondere ein Metal Injection Molding Feedstock (MIM Feedstock), zum Beispiel Catamold®, als Material eingesetzt werden. MIM Feedstock Materialien enthalten verschiedene Stahltypen wie zum Beispiel Edelstäle oder Werkzeugstähle, so dass das hergestellte einstückige Bauteil, insbesondere der Einsatz, gezielt an den Verwendungszweck angepasst werden kann.

Bevorzugt werden das eine einstückig ausgeführte Bauteil und/oder mindestens der Einsatz aus einem Metall enthaltenden Pulver hergestellt. Weiter bevorzugt werden das eine einstückig ausgeführte Bauteil und/oder mindestens der Einsatz aus einer Zusammensetzung hergestellt, die, bezogen auf die Zusammensetzung, 30 Vol-% bis 70 Vol-%, mehr bevorzugt 40 Vol-% bis 60 Vol-%, mindestens eines anorganischen Pulvers und 30 Vol-% bis 70 Vol-%, mehr bevorzugt 40 Vol-% bis 60 Vol-%, mindestens eines Bindemittel enthält. Die Partikelgröße des mindestens einen anorganischen Pulvers beträgt bevorzugt von 0,5 $\mu$m bis 50 $\mu$m, mehr bevorzugt von 0,1 $\mu$m bis 30 $\mu$m. Ferner umfasst das mindestens eine anorganische Pulver bevorzugt ein Metall, eine Metalllegierung, eine Vorläuferverbindung eines keramischen Materials oder Mischungen daraus. Mehr bevorzugt besteht das mindestens eine anorganische Pulver aus einem Metall, einer Metalllegierung, einer Vorläuferverbindung eines keramischen Materials oder Mischungen daraus. Bevorzugt umfasst das mindestens eine Bindemittel eine Polymerzusammensetzung, insbesondere POM. Weiter bevorzugt besteht das mindestens eine Bindemittel aus POM. Die Zusammensetzung kann als Granulat oder Filament eingesetzt werden.

Der Heißkanal, einschließlich des Heißkanalverteilers, wird auf Temperaturen erwärmt, bei denen die Formmassen plastisch verarbeitbar sind, also auf eine Temperatur, die höher ist als die Schmelztemperatur der Formmassen. Üblicherweise wird eine Regelung mit permanenter Temperaturmessung eingesetzt.

Der Heißkanal weist insbesondere eine Heißkanaldüse auf, die an dem Einlass in die jeweilige Kavität angeordnet ist. Eine Temperatur der Heißkanaldüse liegt bevorzugt in einem Bereich von 150°C bis 450°C, mehr bevorzugt von 180°C bis 400°C. Die erste Formmasse und die mindestens eine weitere Formmasse weisen bevorzugt an dem Einlass in die Kavität eine Temperatur im Bereich von 150°C bis 450°C, mehr bevorzugt von 180°C bis 400°C auf. Der Einspritzdruck beziehungsweise der Nachdruck in der Kavität beträgt bevorzugt 400 bar bis 2000 bar. Die Heißkanaldüse umfasst bevorzugt ein besonders wärmeleitfähiges Material.

Die Heißkanaldüse kann als Nadelverschlussdüse, offene Düse mit Torpedo, offene Düse mit geradem Durchlass oder offene Düse mit Spitze, die mehrere Einlässe in die Kavität umfassen kann, ausgeführt sein. Da der Heißkanal auf eine Temperatur oberhalb der Temperatur der weiteren Teile des Spritzgusswerkzeugs temperiert ist, wird kontinuierlich Wärme von dem Heißkanal abgeführt. Der Torpedo dient in einer offenen Heißkanaldüse dazu, die fließfähigen Formmassen trotz der Wärmeabfuhr homogen zu temperieren. Üblicherweise steht der Torpedo in direktem thermischem Kontakt zu einem beheizten Teil der Heißkanaldüse.

Eine Nadelverschlussdüse umfasst eine Aufnahme- und Antriebsvorrichtung für ein Verschlusselement und ein Verschlusselement, insbesondere eine Nadel, die zum Beispiel durch eine Führungsbuchse geführt wird, die mit zwei Halterungen mit einem Düsenkörper der Heißkanaldüse verbunden ist. Das Verschlusselement dient zum Öffnen beziehungsweise Verschließen der Heißkanaldüse. Bevorzugt weist der Heißkanal, weiter bevorzugt das einstückige Bauteil und insbesondere der Einsatz, entlang der Heißkanallängsachse eine zentrale Bohrung zur Durchführung des Verschlusselements auf. Weist das einstückige Bauteil, insbesondere der Einsatz, zusätzlich zu den mindestens zwei Kanälen die zentrale Bohrung auf, kann das einstückige Bauteil, beziehungsweise der Einsatz, in Kombination mit einer Nadelverschlussdüse eingesetzt werden.

Die Nadel wird insbesondere durch den Einsatz hindurchgeführt, um dann an dem Einlass in die Kavität die Heißkanaldüse zu verschließen. Der Einsatz beziehungsweise die zentrale Bohrung dient zur Führung der Nadel, die sich relativ zu dem Einsatz und den mindestens zwei Kanälen durch die zentrale Bohrung bewegt.

Der Heißkanal mit den mindestens zwei Kanälen kann in Kombination mit einer offenen Düse eingesetzt werden. Liegt eine offene Düse vor, kann der Heißkanal, bevorzugt das einstückige Bauteil, insbesondere der Einsatz, einen zentralen Vollzylinder aufweisen, der zwischen den mindestens zwei Kanälen, insbesondere anstelle der bei der Nadelverschlussdüse vorliegenden zentralen Bohrung, angeordnet ist. Ferner kann der Heißkanal zusätzlich zu den mindestens zwei Kanälen einen Torpedo aufweisen, der in Förderrichtung hinter den mindestens zwei Kanälen angeordnet sein kann.

Die mindestens zwei Kanäle können, insbesondere mit dem Einsatz, in der Heißkanaldüse des Heißkanals, in einem Verteiler des Heißkanals und/oder benachbart zur oder direkt an der Eintrittsöffnung in das Spritzgusswerkzeug in dem Heißkanal angeordnet sein. Weiter bevorzugt weist die Heißkanaldüse einen Heißkanaldüsenkopf auf, der auch als Düsenkappe oder Einschraubteil bezeichnet wird und in dem die mindestens zwei Kanäle bevorzugt angeordnet sind. Der Heißkanaldüsenkopf kann den Einsatz umfassen, der die mindestens zwei Kanäle umfasst. Weiterhin kann die Heißkanaldüse mittels einer Schraubverbindung mit weiteren Teilen des Heißkanals verbunden sein. Durch die Schraubverbindung ist die Heißkanaldüse als Verschleißteil austauschbar und durch die Schraubverbindung kann der Einsatz in dem Heißkanal fixiert werden.

Die Anordnung der mindestens zwei Kanäle im Spritzgusswerkzeug und insbesondere in der Heißkanaldüse bietet den Vorteil, dass die mindestens zwei Kanäle möglichst nah an der Kavität angeordnet sind und so der auf die Formmassen aufgeprägte Drall direkter in das Formteil übertragen wird und die Trennung der unterschiedlichen Schmelzeportionen möglichst lang erhalten bleibt.

Zur Durchführung des erfindungsgemäßen Verfahrens zur Herstellung von reproduzierbar marmorierten Formteilen ist jegliche Art einer Heißkanaldüse einsetzbar. In Abhängigkeit der Gestaltung der Heißkanaldüse, insbesondere als offene Düse oder Nadelverschlussdüse mit verschiedenen Halterungen der Nadel, werden unterschiedliche Marmorierungsmuster auf den Formteilen erzeugt. So führt bereits die Verwendung einer Nadelverschlussdüse zu einem stark ausgeprägten Marmorierungsmuster. Die konkrete Form des Marmorierungsmusters wird durch die Geometrie der Halterung der Nadel beeinflusst, wobei der Einsatz die Halterung der Nadel bilden kann.

Bei Verwendung einer offenen Düse ohne die mindestens zwei Kanäle wäre eine kreisförmige gleichmäßige Farbverteilung sichtbar. Der optische Effekt, der von der Verwendung ausschließlich einer offenen Düse erzeugt wird, kann als konzentrische Kreise beschrieben werden. Werden mindestens zwei, zum Beispiel drei, vier oder sechs Kanäle verwendet, so wird die kreisförmige Struktur durchbrochen und leichte Verwirbelungen der ersten Formmasse in der mindestens einen weiteren Formmasse sind sichtbar. Eine Anzahl von Streifen, die der Anzahl von Kanälen entspricht, welche Fließnähte erzeugen, ist erkennbar.

Durch Ausführung der mindestens zwei Kanäle jeweils in Form einer gewundenen Bohrung werden Verwirbelungen der ersten Formmasse in der mindestens einen weiteren Formmasse verstärkt. Sind die mindestens zwei Kanäle jeweils als Schneckengang ausgeführt, so bilden sich streifenförmige Wellen als Marmorierungsmuster mit einer sehr guten Reproduzierbarkeit.

Ausführungsbeispiele der Erfindung sind in den Zeichnungen dargestellt und werden in der nachfolgenden Beschreibung näher erläutert. Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

Es zeigen:

Figur 1          eine erste schematische Darstellung einer Spritzgussmaschine mit Spritzgusswerkzeug,

Figur 2          eine zweite schematische Darstellung einer Schneckenspritzgussmaschine mit Spritzgusswerkzeug,

| Figur 3 | einen Ausschnitt einer Schneckenspritzgussmaschine, |
|---|---|
| Figuren 4, 6 und 8 | jeweils einen Ausschnitt eines Heißkanals, |
| Figuren 5, 7 und 9 | jeweils einen Querschnitt des Ausschnitts des Heißkanals nach Figur 4, 6 beziehungsweise 8, |
| Figuren 10 bis 21 | jeweils eine Draufsicht beziehungsweise eine perspektivische Ansicht verschiedener Ausführungsformen der mindestens zwei Kanäle, |
| Figuren 22 bis 27 | jeweils eine Draufsicht, eine perspektivische Ansicht beziehungsweise einen Längsschnitt zweier weiterer Ausführungsformen der mindestens zwei Kanäle und |
| Figur 28 | einen Einsatz mit Hinterschnitt. |

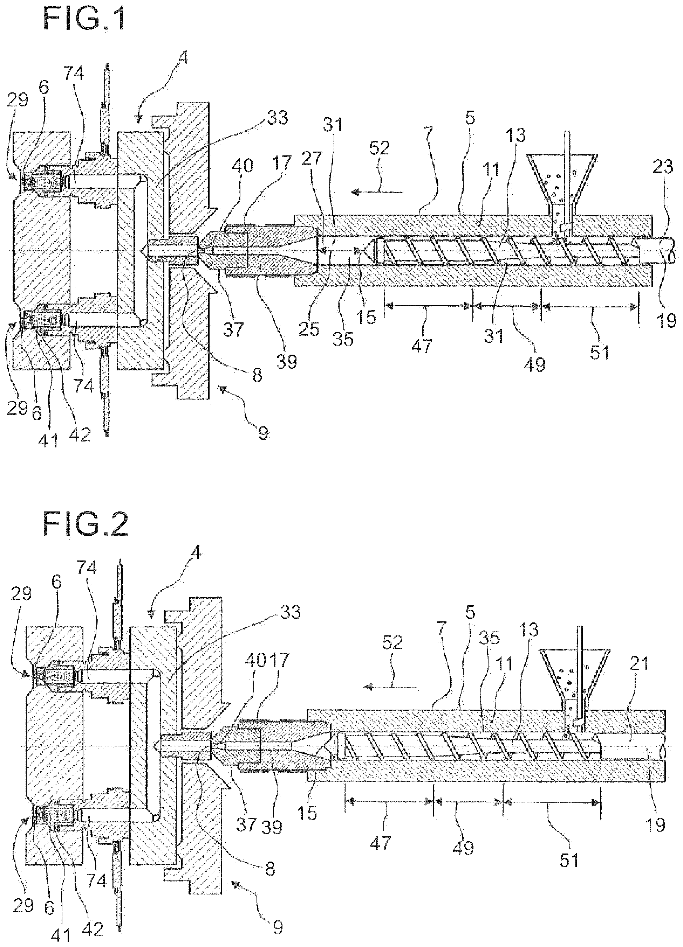

Figur 1 zeigt eine schematische Darstellung einer Schneckenspritzgussmaschine 7, die eine Einspritzeinheit 5 umfasst. Die Einspritzeinheit 5 umfasst einen Hohlzylinder 11 mit einem inneren freien Volumen 31, eine Schnecke 13 mit einer Schneckenspitze 15 und eine Düse 17 mit einem Düsenkopf 37 und einem Düsenkörper 39. Die Schnecke 13 ist rotierbar und in Richtung einer Längsachse 19 des Hohlzylinders 11 gelagert. Die Schnecke 13 befindet sich in einer hinteren Stellung 23 im Hohlzylinder 11, wobei sich ein Abstand 25 zwischen der Düse 17 und der Schneckenspitze 15 erstreckt, so dass ein Freiraum 27 zwischen der Düse und der Schneckenspitze 15 in dem Hohlzylinder 11 vorliegt.

An die Düse 17, die eine Austrittsöffnung 40 aufweist, schließt sich ein Spritzgusswerkzeug 9 mit Heißkanal 4 und zwei Kavitäten 29 an. Das Spritzgusswerkzeug 9 ist vergrößert dargestellt. Die Kavitäten 29 besitzen ein inneres Volumen und sind hier lediglich angedeutet. Ferner besitzt das Spritzgusswerkzeug 9 eine Eintrittsöffnung 8 in das Spritzgusswerkzeug 9 und zwei Einlässe 6 in die Kavitäten 29. Zwischen der Eintrittsöffnung 8 und den Einlässen 6 ist als Anguss ein Heißkanal 4 mit einem Heißkanalverteiler 33, der auch als Verteilerbalken bezeichnet werden kann, angeordnet. Zu jeder Kavität 29 führt aus dem Heißkanalverteiler 33 ein Schmelzekanal 74 und jeder der zwei Schmelzekanäle 74 des Heißkanals 4 weist einen Einsatz 42 mit Kanälen 41 auf, in die der Schmelzekanal 74 in dem Einsatz 42 aufgeteilt wird.

In der Schneckenspritzgussmaschine 7 weist die Schnecke 13 eine Meteringzone 47, eine Kompressionszone 49 und eine Einzugszone 51 auf. Mit der Schnecke 13 können Formmassen in einer Förderrichtung 52 in den Freiraum 27 gefördert werden. Der Freiraum 27 ist Teil des Innenraums 35 des Hohlzylinders 11, der von dem Hohlzylinder 11 und der Schnecke 13 begrenzt wird.

Figur 2 zeigt eine schematische Darstellung einer Schneckenspritzgussmaschine 7 mit einem Spritzgusswerkzeug 9, die im Wesentlichen der Darstellung von Figur 1 entspricht. Jedoch befindet sich die Schnecke 13 gemäß Figur 2 in einer vorderen Stellung 21 in dem Hohlzylinder 11. Im Vergleich zu Figur 1 wurde der Abstand 25 durch ein Vorstoßen der Schnecke 13 verringert.

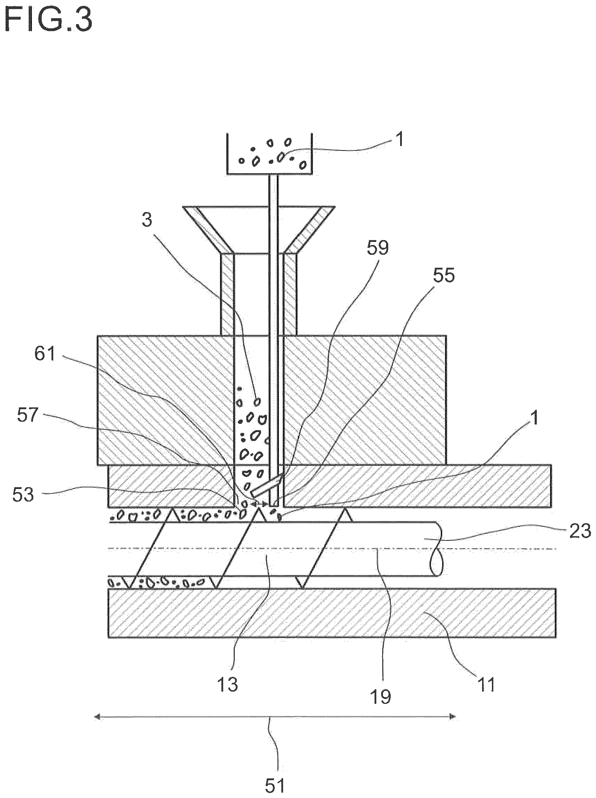

Figur 3 zeigt einen Ausschnitt der Schneckenspritzgussmaschine 7 gemäß Figur 1. Ein Teil der Einzugszone 51 der Schnecke 13, die sich in dem Hohlzylinder 11 befindet, ist dargestellt. Entlang der Längsachse 19 des Hohlzylinders 11 ist die Schnecke 13 beweglich und befindet sich in der hinteren Stellung 23. Ein Teil der Schnecke 13 befindet sich unterhalb einer Zuführöffnung 53. In der dargestellten Ausführungsform werden eine erste Formmasse 1 und eine weitere Formmasse 3 durch die Zuführöffnung 53 der Schnecke 13 zugeführt. Die Zuführöffnung 53 weist einen ersten Bereich 55 zur Zuführung der ersten Formmasse 1 und einen zweiten Bereich 57 zur Zuführung der weiteren Formmasse 3 auf. Durch eine Abdeckung 59 liegt ein zweiter Abstand 61 zwischen dem ersten Bereich 55 und dem zweiten 57 vor, wodurch die erste Formmasse 1 räumlich separat von der weiteren Formmasse 3 zugeführt wird.

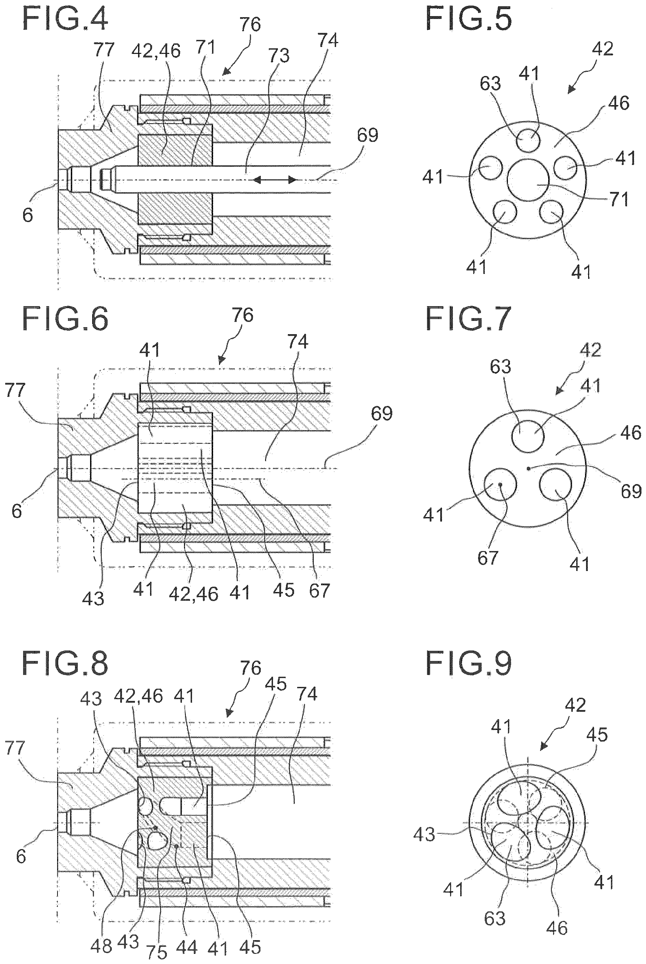

Figur 4 zeigt eine Heißkanaldüse 76 eines Heißkanals 4 mit einer Heißkanaldüsenkappe 77. In der Heißkanaldüsenkappe 77 ist als einstückig ausgeführtes Bauteil 46 ein Einsatz 42 angeordnet. Durch den Einsatz 42 wird eine Nadel 73 geführt, die entlang einer Heißkanallängsachse 69 beweglich ist und einen Einlass 6 in eine Kavität 29 verschließen kann.

Figur 5 zeigt eine Querschnittsansicht des Einsatzes 42 gemäß Figur 4. Der Einsatz 42 weist eine zentrale Bohrung 71 auf, durch die die Nadel 73 geführt wird. Darüber hinaus weist der Einsatz 5 Kanäle 41 auf, die als gerade Bohrungen mit einer runden Querschnittsfläche 63 ausgeführt sind. Bei den Kanälen 41 handelt es sich um Durchgangsbohrungen, die parallel zu der Heißkanallängsachse 69 verlaufen.

Die Figuren 6 und 7 beziehungsweise 8 und 9 entsprechen im Wesentlichen den Figuren 4 und 5 mit dem Unterschied, dass die Einsätze 42 anders gestaltet sind.

Gemäß den Figuren 6 und 7 weist der Einsatz 42 keine zentrale Bohrung 71 auf, da die Heißkanaldüse 76 als offene Düse ohne Nadel 73 ausgeführt ist. Gleiches gilt für den Teil des Heißkanals 4 gemäß den Figuren 8 und 9.

Der Einsatz 42 der offenen Heißkanaldüse 76 gemäß den Figuren 6 und 7 besitzt drei gerade Kanäle 41 mit Mittelachsen 67, die parallel zu der Heißkanallängsachse 69 angeordnet sind.

Gemäß den Figuren 8 und 9 ist ebenfalls eine Heißkanaldüse 76 dargestellt, die als offene Düse ausgeführt ist. Der Einsatz 42 gemäß den Figuren 8 und 9 umfasst drei Kanäle 41, wobei jeder Kanal 41 zumindest teilweise eine Spirale 75 bildet, die an einer ersten Position 44 eine größere Steigung aufweist als an einer zweiten Position 48. Jeder Kanal 41 weist ein erstes Ende 43 und ein zweites Ende 45 auf, wobei das erste Ende 43 benachbart zu dem Einlass 6 angeordnet ist. Die Kanäle 41 weisen jeweils eine ellipsoide beziehungsweise runde Querschnittsfläche 63 auf.

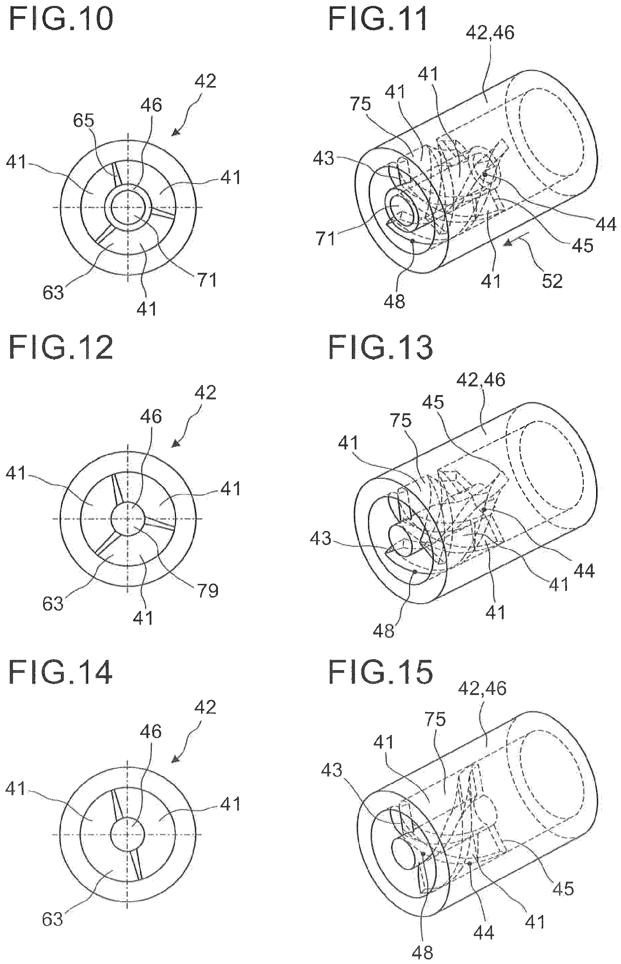

Die Figuren 10 bis 21 zeigen sechs weitere Ausführungsformen eines Einsatzes 42, die jeweils in einer Draufsicht beziehungsweise in perspektivischer Ansicht dargestellt sind. In den Figuren 10 bis 21 bilden die Kanäle 41 jeweils eine Spirale 75, wobei die Mittelachse 67 jeden Kanals 41 jeweils in Form der Spirale 75 um die Heißkanallängsachse 69 angeordnet ist und eine bestimmte Anzahl an Windungen 50 aufweist.

Gemäß den Figuren 10 und 11 weist der Einsatz 42 drei Kanäle 41 sowie eine zentrale Bohrung 71 zur Nadelführung auf. Die Steigung der Spiralen 75 nimmt in Förderrichtung 52, also in Richtung von der Eintrittsöffnung 8 des Spritzgusswerkzeugs 9 zu dem Einlass 6 und von dem zweiten Ende 45 zu dem ersten Ende 43 jeden Kanals 41, ab. An einer ersten Position 44 liegt eine größere Steigung als an einer zweiten Position 48 vor. Die Steigung ändert sich von ca. 90° zu einer relativ flachen Steigung von ca. 30°. Dadurch ergeben sich ein strömungsgünstiger Einlauf sowie ein starker Drall, der an einem Auslauf, also am ersten Ende 43, jeden Kanals 41, auf die plastifizierte Formmasse aufgeprägt wird. Entlang der Heißkanallängsachse 69 liegt eine konstante freie Querschnittsfläche 63 und damit ein konstantes Öffnungsverhältnis vor. Die Spiralen 75 weisen jeweils eine halbe Windung 50 auf, so dass ein Steg 65 zwischen zwei Kanälen 41 um 180° im Vergleich vom ersten Ende 43 und zweiten Ende 45 gedreht wird.

Der Einsatz 42 gemäß Figuren 12 und 13 entspricht dem Einsatz gemäß den Figuren 10 und 11 mit dem Unterschied, dass es sich um einen Einsatz 42 für offene Düsen handelt, da die Kanäle 41 an der Heißkanallängsachse 69 durch einen Vollzylinder 79 voneinander abgetrennt sind.

Der Einsatz 42 gemäß Figuren 14 und 15 entspricht dem Einsatz 42 gemäß den Figuren 12 und 13 mit dem Unterschied, dass lediglich zwei Kanäle 41 vorliegen.

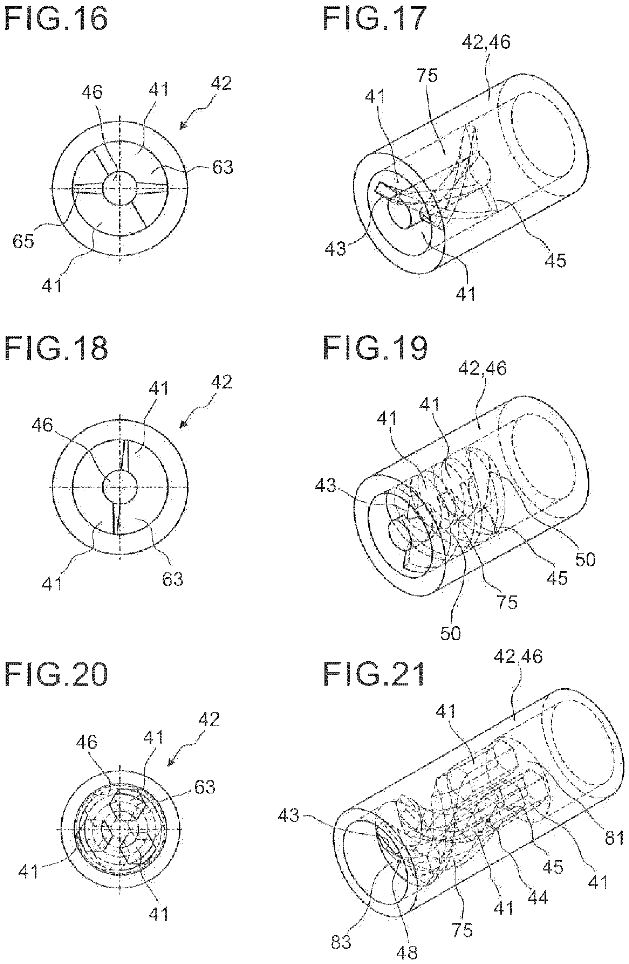

Der Einsatz 42 gemäß Figuren 16 und 17 entspricht im Wesentlichen dem Einsatz 42 gemäß den Figuren 14 und 15 mit dem Unterschied, dass die Spiralen 75 eine konstante Steigung aufweisen und lediglich jeweils nur ca. ein Drittel einer vollständigen Windung 50 aufweisen, so dass der Steg 65 um ca. 120° im Vergleich vom ersten Ende 43 zum zweiten Ende 45 gedreht wird. Die Steigung beträgt ca. 60°.

Der Einsatz 42 gemäß Figuren 18 und 19 entspricht im Wesentlichen dem Einsatz 42 gemäß den Figuren 16 und 17 mit dem Unterschied, dass die Spiralen 75 1,5 Windungen 50 aufweisen, so dass eine Steigung von ca. 20° vorliegt.

Der Einsatz 42 gemäß Figuren 20 und 21 ist ähnlich zu dem Einsatz 42 gemäß den Figuren 12 und 13. Es liegen drei Kanäle 41 in Form jeweils einer Spirale 75 vor, die in einer ersten Position 44 eine größere Steigung als in einer zweiten Position 48 aufweisen. Die Kanäle 41 des Einsatzes 42 gemäß den Figuren 20 und 21 bilden jeweils teilweise eine Spirale 75 und die ersten Enden 43 der Kanäle 41 münden in eine erste Endfläche 83. Ein weiterer Teil der Kanäle 41 verläuft gerade und mündet mit dem zweiten Ende 45 in eine zweite Endfläche 81. Ferner weisen die Kanäle 41 eine hexagonale Querschnittsfläche 63 auf.

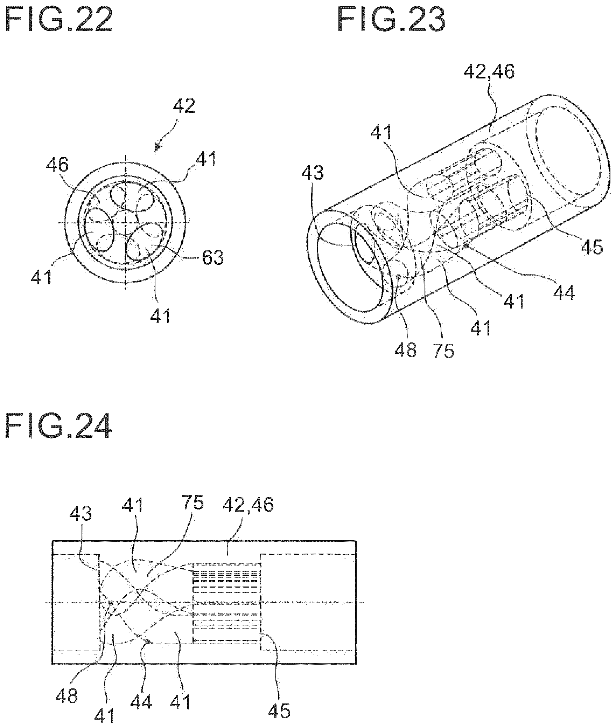

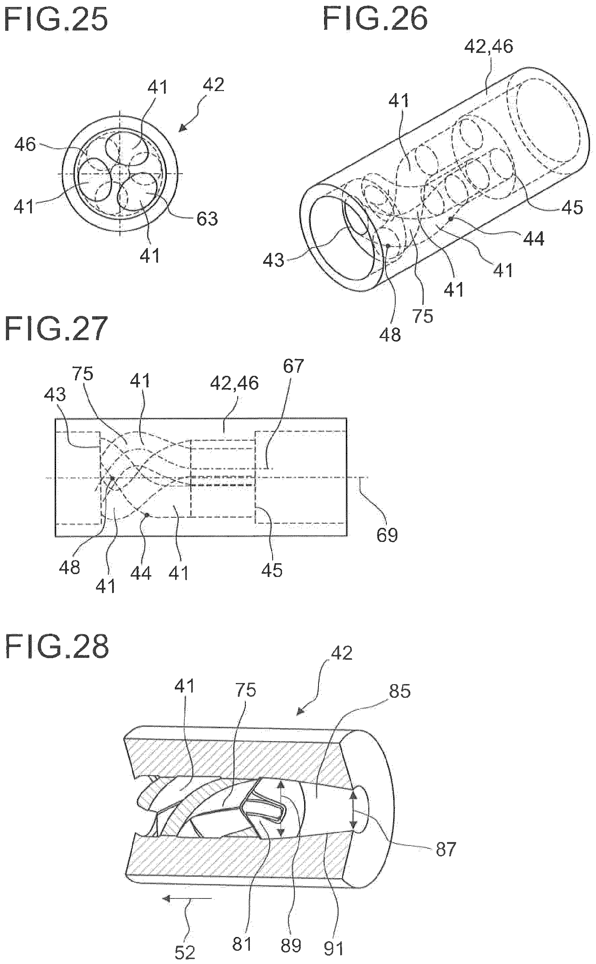

Der Einsatz 42, der in einer Draufsicht, in perspektivischer Ansicht und in einem Längsschnitt in den Figuren 22, 23 beziehungsweise 24 dargestellt ist, entspricht im Wesentlichen dem Einsatz 42 gemäß den Figuren 25, 26 und 27 mit dem Unterschied, dass die Kanäle 41 eine konstante ellipsoide Querschnittsfläche 63 aufweisen. Durch eine konstante Querschnittsfläche 63 als Ellipse wird ein höheres Öffnungsverhältnis in der Querschnittsfläche 63 im Vergleich zu einer teilweise runden Querschnittsfläche 63 erzielt.

Der Einsatz 42 gemäß den Figuren 25, 26 und 27 entspricht dem Einsatz 42 der Figuren 6 und 7 und im Wesentlichen dem Einsatz 42 der Figuren 22, 23 und 24 mit dem Unterschied, dass die Kanäle 41 eine veränderliche Querschnittsfläche 63 aufweisen. An dem zweiten Ende 45 besitzen die Kanäle 41 eine runde Querschnittsfläche 63 und auch entlang des gerade verlaufenden Teils der Kanäle 41. In der Spirale 75 verändert sich die Querschnittsfläche 63 von einer runden Form zu einer abgeplatteten ellipsoiden Form, da eine Neigung der Mittelachsen 67 der Kanäle 41 im Verhältnis zur Heißkanallängsachse 69 zunimmt.

Figur 28 zeigt einen Einsatz 42, der einen Hinterschnitt 91 aufweist. Der Einsatz 42 umfasst drei Kanäle 41, die jeweils eine Spirale 75 mit einer variablen Steigung bilden. In dem Einsatz 42 endet in Förderrichtung 52 ein Einsatzschmelzekanal 85 an einer zweiten Endfläche 81 der Kanäle 41. Der Einsatzschmelzekanal 85 weist den Hinterschnitt 91 auf, so dass ein erster Durchmesser 87 des Einsatzschmelzekanals 85 kleiner ist ein zweiter Durchmesser 89 des Einsatzschmelzekanals 85 an der zweiten Endfläche 81. Entsprechend nimmt der Durchmesser 87, 89 des Einsatzschmelzekanals 85 in der Förderrichtung 52 zu.

Beispiel

Herstellung von Untersetzern

Zur Herstellung von Untersetzern wurden eine hydraulische Spritzgussmaschine mit 1000 kN Zuhaltekraft, die einen Zylinder mit 25 mm Innendurchmesser umfasst, und ein Spritzgusswerkzeug mit zwei Kavitäten und einem Heißkanalsystem eingesetzt.

Es wurde für zwei Untersetzer, also pro Einspritzvorgang, der auch als Zyklus oder Schuss bezeichnet wird, jeweils eine erste Menge einer ersten Formmasse bereitgestellt. Die erste Formmasse bestand aus einem schwarzen Farbgranulat in Form von Zylindergranulat mit einem jeweiligen Durchmesser von 1 mm und einer Länge von 2 mm, das ein schwarzes Färbemittel mit einer Konzentration von 20 Gew.-% in PBT enthielt. Die erste Menge wies eine Masse von 0,03 g auf, was fünf Granulatkörnern entsprach.

Des Weiteren wurde für jeweils zwei Untersetzer eine zweite Menge einer weiteren Formmasse bereitgestellt. Die zweite Menge wies eine Masse von 40 g auf. Die weitere Formmasse umfasste pro zweiter Menge 39,77 g eines ungefärbten PBT-Granulats sowie 0,23 g eines eingefärbten PBT-Granulats, das ein weiteres Färbemittel in konzentrierter Form enthielt. Die weitere Formmasse lag als Granulatgemisch vor und das ungefärbte PBT-Granulat und das eingefärbte PBT-Granulat waren in der weiteren Formmasse vorgemischt.

In jedem Zyklus wurde eine erste Menge der ersten Formmasse auf die Schnecke, die sich in einer hinteren Stellung befand, eingebracht. Dann wurde die Schnecke zum Einspritzen in eine vordere Stellung zur Düse bewegt. Zur Zugabe der Formmassen wurde ein Dosiergerät mit zwei Trichtern verwendet, das auf der Zylinderzuführöffnung montiert war. Der Trichter, der für die erste Formmasse benutzt wurde, mündete über einem Röhrchen nahe am Schneckengang der Schnecke im Hohlzylinder. Hierdurch war die gewünschte Ablageposition der ersten Menge gewährleistet.

Die plastifizierten Formmassen wurden in das gekühlte Spritzgusswerkzeug eingespritzt, das das Heißkanalsystem und zwei Kavitäten mit jeweils einem Schmelzekanal mit Heißkanaldüse umfasste, so dass bei jedem Zyklus zwei marmorierte Formteile parallel gefertigt wurden. Durch den Heißkanal wurde die plastifizierte Formmasse bis hin zur Kavität, also bis zum Formteil, in einem flüssigen Zustand gehalten. Als Heißkanaldüsen wurde jeweils eine Nadelverschlussdüse, die hydraulisch betrieben wurde, eingesetzt.

Jeder Schmelzekanal des Heißkanals umfasste wechselbare Einsätze, die jeweils eine zentrale Bohrung zur Führung der Nadel aufwiesen. Weiterhin umfassten die Einsätze jeweils mindestens zwei Kanäle, in die der Strom der plastifizierten Formmassen aufgeteilt und anschließend im Schmelzekanal vor dem Austritt aus der Heißkanaldüse wieder zusammengeführt wurden. Es wurden Einsätze mit drei beziehungsweise vier Kanälen verwendet, so dass Untersetzer mit einem Muster umfassend eine dreifache beziehungsweise vierfache Wiederholung erhalten wurden. Vor einer der beiden Heißkanaldüsen war ein Einsatz mit drei Kanälen angeordnet und vor der anderen der beiden Heißkanaldüsen war ein Einsatz mit vier Kanälen angeordnet. Damit konnten in einem einzigen Zyklus zwei gleich eingefärbte Untersetzer mit unterschiedlichem, jeweils reproduzierbarem Marmorierungsmuster in nur einem Spritzgusswerkzeug hergestellt werden.

Einer der verwendeten Einsätze wies eine Geometrie gemäß Tabelle 1 auf, wobei es sich um jeweils als Schneckengang ausgeführte Kanäle handelte wie in den Figuren 10 und 11 dargestellt.

Tabelle 1

| Startpunkt des Abschnitts der Heißkanallängsachse [mm] | Durchmesser der Spirale [mm] | Steigungswinkel [°] |
|---|---|---|
| 0 | 10 | 72,6 |
| 4 | 10 | 57,9 |
| 8 | 10 | 43,7 |
| 12 | 10 | 32,5 |
| 14 | 10 | 25,5 |

20 Untersetzer wurden in zehn aufeinanderfolgenden Zyklen hergestellt, so dass das Verfahren mehrmals wiederholt wurde. Es wurde eine gute Reproduzierbarkeit des entstandenen Marmorierungsmusters festgestellt.

Bezugszeichenliste

1 erste Formmasse
3 mindestens eine weitere Formmasse
4 Heißkanal
5 Einspritzeinheit

| | |
|---|---|
| 6 | Einlass |
| 7 | Schneckenspritzgussmaschine |
| 8 | Eintrittsöffnung |
| 9 | Spritzgusswerkzeug |
| 11 | Hohlzylinder |
| 13 | Schnecke |
| 15 | Schneckenspitze |
| 17 | Düse |
| 19 | Längsachse des Hohlzylinders |
| 21 | vordere Stellung |
| 23 | hintere Stellung |
| 25 | Abstand |
| 27 | Freiraum |
| 29 | Kavität |
| 31 | inneres freies Volumen |
| 33 | Heißkanalverteiler |
| 35 | Innenraum |
| 37 | Düsenkopf |
| 39 | Düsenkörper |
| 40 | Austrittsöffnung |
| 41 | Kanäle |
| 42 | Einsatz |
| 43 | erstes Ende |
| 44 | erste Position |
| 45 | zweites Ende |
| 46 | einstückig ausgeführtes Bauteil |
| 47 | Meteringzone |
| 48 | zweite Position |
| 49 | Kompressionszone |
| 50 | Windung |
| 51 | Einzugszone |
| 52 | Förderrichtung |
| 53 | Zufuhröffnung |
| 55 | erster Bereich |
| 57 | zweiter Bereich |
| 59 | Abdeckung |
| 61 | zweiter Abstand |
| 63 | Querschnittsfläche |
| 65 | Steg |
| 67 | Mittelachse |
| 69 | Heißkanallängsachse |
| 71 | zentrale Bohrung |
| 73 | Nadel |
| 74 | Schmelzekanal |
| 75 | Spirale |
| 76 | Heißkanaldüse |
| 77 | Heißkanaldüsenkappe |
| 79 | Vollzylinder |
| 81 | zweite Endfläche |
| 83 | erste Endfläche |
| 85 | Einsatzschmelzekanal |
| 87 | erster Durchmesser |
| 89 | zweiter Durchmesser |
| 91 | Hinterschnitt |

**Patentansprüche**

1. Spritzgusswerkzeug (9) zur Herstellung von marmorierten Formteilen umfassend mindestens einen Heißkanal (4), eine Kavität (29), eine Eintrittsöffnung (8) in das Spritzgusswerkzeug (9) und einen Einlass (6) in die Kavität (29), wobei der Heißkanal (4) mindestens zwei Kanäle (41) aufweist, die an einem ersten Ende (43) jeden Kanals (41) mit dem Einlass (6) in die Kavität (29) und an einem zweiten Ende (45) jeden Kanals (41) mit der Eintrittsöffnung (8) in das Spritzgusswerkzeug (9) verbunden sind, wobei die mindestens zwei Kanäle (41) jeweils mindestens teilweise eine Spirale (75) bilden und die mindestens zwei Kanäle (41) von einem einstückig ausgeführten Bauteil (46) begrenzt sind und wobei die mindestens zwei Kanäle (41) zwischen ihrem ersten Ende (43) und ihrem zweiten Ende (45) durch das einstückig ausgeführte Bauteil (46) voneinander getrennt sind, wobei die mindestens zwei Kanäle (41) jeweils eine Mittelachse (67) aufweisen und die Mittelachse (67) in Form der Spirale (75) um eine Heißkanallängsachse (69) angeordnet ist, **dadurch gekennzeichnet, dass** die Spirale (75) an mindestens zwei unterschiedlichen Positionen (44, 48) jeweils unterschiedliche Steigungen aufweist.

2. Spritzgusswerkzeug (9) nach Anspruch 1, **dadurch gekennzeichnet, dass** die Spirale (75) eine Anzahl an Windungen (50) aufweist und die Anzahl der Windungen (50) in einem Bereich von mehr als 0,5 bis 3 liegt.

3. Spritzgusswerkzeug (9) nach einem der Ansprüche 1 oder 2, **dadurch gekennzeichnet, dass** der Heißkanal (4) drei bis acht Kanäle (41) aufweist.

4. Spritzgusswerkzeug (9) nach einem der Ansprüche 1 bis 3, **dadurch gekennzeichnet, dass** sich eine erste Steigung der Spirale (75) an einer ersten Position (44) von einer zweiten Steigung der Spirale (75) an einer zweiten Position (48) um mindestens 20° unterscheidet.

5. Spritzgusswerkzeug (9) nach einem der Ansprüche 1 bis 4, **dadurch gekennzeichnet, dass** die Spirale (75) an mindestens einer Position (44, 48) eine Steigung von weniger als 60° aufweist.

6. Spritzgusswerkzeug (9) nach einem der Ansprüche 1 bis 5, **dadurch gekennzeichnet, dass** die Steigung der Spirale (75) in einer Richtung von der Eintrittsöffnung (8) zu dem Einlass (6) abnimmt.

7. Spritzgusswerkzeug (9) nach einem der Ansprüche 1 bis 6, **dadurch gekennzeichnet, dass** der Heißkanal (4) entlang der Heißkanallängsachse (69) eine zentrale Bohrung (71) und gegebenenfalls ein Verschlusselement, insbesondere eine Nadel (73), aufweist.

8. Spritzgusswerkzeug (9) nach einem der Ansprüche 1 bis 7, **dadurch gekennzeichnet, dass** die mindestens zwei Kanäle (41) in einem radialen Querschnitt des Heißkanals (4) jeweils eine runde, ellipsoide, ringsegmentförmige oder mehreckige wie hexagonale oder dreieckige Querschnittsfläche (63) aufweisen.

9. Spritzgusswerkzeug (9) nach einem der Ansprüche 1 bis 8, **dadurch gekennzeichnet, dass** das einstückig ausgeführte Bauteil (46) ein Einsatz (42) ist, der in dem Heißkanal (4) angeordnet ist, und die mindestens zwei Kanäle (41) in dem Einsatz (42) angeordnet sind.

10. Verfahren zur Herstellung eines Spritzgusswerkzeugs (9) zur Herstellung von marmorierten Formteilen umfassend mindestens einen Heißkanal (4), eine Kavität (29), eine Eintrittsöffnung (8) in das Spritzgusswerkzeug (9) und einen Einlass (6) in die Kavität (29), wobei der Heißkanal (4) mindestens zwei Kanäle (41) aufweist, die an einem ersten Ende (43) jeden Kanals (41) mit dem Einlass (6) in die Kavität (29) und an einem zweiten Ende (45) jeden Kanals (41) mit der Eintrittsöffnung (8) in das Spritzgusswerkzeug (9) verbunden sind, wobei die mindestens zwei Kanäle (41) jeweils mindestens teilweise eine Spirale (75) bilden und die mindestens zwei Kanäle (41) von einem einstückig ausgeführten Bauteil (46) begrenzt sind und wobei die mindestens zwei Kanäle (41) zwischen ihrem ersten Ende (43) und ihrem zweiten Ende (45) durch das einstückig ausgeführte Bauteil (46) voneinander getrennt sind, wobei zumindest das eine einstückig ausgeführte Bauteil (46), insbesondere der Einsatz (42), mit einem additiven Verfahren, insbesondere mittels 3D-Druck, hergestellt wird und wobei
die mindestens zwei Kanäle (41) jeweils eine Mittelachse (67) aufweisen und die Mittelachse (67) in Form der Spirale (75) um eine Heißkanallängsachse (69) angeordnet ist, **dadurch gekennzeichnet, dass** die Spirale (75) an mindestens zwei unterschiedlichen Positionen (44, 48) jeweils unterschiedliche Steigungen aufweist.

11. Verfahren zur Herstellung von marmorierten Formteilen, wobei eine erste Formmasse (1) und mindestens eine weitere Formmasse (3) jeweils zeitlich und/oder räumlich separat einer Einspritzeinheit (5) einer Schneckenspritzgussmaschine (7) zugegeben und aus der Einspritzeinheit (5) der Schneckenspritzgussmaschine (7) in ein Spritzgusswerkzeug (9) eingespritzt werden,

wobei das Spritzgusswerkzeug (9) mindestens einen Heißkanal (4), eine Kavität (29), eine Eintrittsöffnung (8) in das Spritzgusswerkzeug (9) und einen Einlass (6) in die Kavität (29) umfasst, wobei der Heißkanal (4) mindestens zwei Kanäle (41) aufweist, die an einem ersten Ende (43) jeden Kanals (41) mit dem Einlass (6) in die Kavität und an einem zweiten Ende (45) jeden Kanals (41) mit der Eintrittsöffnung (8) in das Spritzgusswerkzeug verbunden sind, wobei die mindestens zwei Kanäle (41) jeweils mindestens teilweise eine Spirale (75) bilden und die mindestens zwei Kanäle (41) von einem einstückig ausgeführten Bauteil (46) begrenzt sind und wobei die mindestens zwei Kanäle (41) zwischen ihrem ersten Ende (43) und ihrem zweiten Ende (45) durch das einstückig ausgeführte Bauteil (46) voneinander getrennt sind und wobei die mindestens zwei Kanäle (41) jeweils eine Mittelachse (67) aufweisen und die Mittelachse (67) in Form der Spirale (75) um eine Heißkanallängsachse (69) angeordnet ist, **dadurch gekennzeichnet, dass** die Spirale (75) an mindestens zwei unterschiedlichen Positionen (44, 48) jeweils unterschiedliche Steigungen aufweist.

12. Verfahren nach Anspruch 11, **dadurch gekennzeichnet, dass** die Einspritzeinheit (5) einen Hohlzylinder (11), eine Schnecke (13) mit einer Schneckenspitze (15) und eine Düse (17) umfasst und die Schnecke (13) rotierbar und in Richtung einer Längsachse (19) des Hohlzylinders (11) zwischen einer vorderen Stellung (21) und einer hinteren Stellung (23) beweglich in dem Hohlzylinder (11) angeordnet ist, wobei ein Abstand (25) zwischen der Schneckenspitze (15) und der Düse (17) in der vorderen Stellung (21) kleiner ist als in der hinteren Stellung (23),

und wobei die erste Formmasse (1) eine erste Polymermasse und ein erstes Färbemittel enthält und die mindestens eine weitere Formmasse (3) mindestens eine weitere Polymermasse und gegebenenfalls mindestens ein weiteres Färbemittel enthält,
umfassend die folgenden Schritte:

a) gegebenenfalls Zuführen einer ersten Menge der ersten Formmasse (1) auf die Schnecke (13), wenn sich die Schnecke (13) in der hinteren Stellung befindet (23),
b) gegebenenfalls Vorschießen der Schnecke (13) aus der hinteren Stellung (23) in die vordere Stellung (21),
c) Zuführen einer zweiten Menge der mindestens einen weiteren Formmasse (3) auf die Schnecke (13),
d) Plastifizieren der ersten Formmasse (1) und der mindestens einen weiteren Formmasse (3) in dem Hohlzylinder (11) der Schnecke (13), wobei die Schnecke (13) rotiert und zumindest ein Teil der ersten Formmasse (1) und zumindest ein Teil der mindestens einen weiteren Formmasse (3) in einen Freiraum (27) in dem Hohlzylinder (11) zwischen der Düse (17) und der Schneckenspitze (15) gefördert werden und wobei sich die Schnecke (13) von der vorderen Stellung (21) in die hintere Stellung (23) bewegt,
e) Zuführen einer neuen ersten Menge der ersten Formmasse (1) auf die Schnecke (13), wenn sich die Schnecke (13) in der hinteren Stellung befindet (23),
f) Einspritzen der ersten Formmasse (1) und der mindestens einen weiteren Formmasse (3) aus dem Freiraum (27) in dem Hohlzylinder (11) in eine Kavität (29) des Spritzgusswerkzeugs (9), wobei die Schnecke (13) aus der hinteren Stellung (23) in die vordere Stellung (21) vorschießt,
g) Abkühlen der ersten Formmasse (1) und der mindestens einen weiteren Formmasse (3) in dem Spritzgusswerkzeug (9), so dass ein marmoriertes Formteil entsteht
h) Entfernen des marmorierten Formteils aus dem Spritzgusswerkzeug (9),

wobei die Schritte c) bis h) wiederholt werden, Schritt e) vor Schritt f) durchgeführt wird und gegebenenfalls Schritt a) vor Schritt b) durchgeführt wird und
wobei das Zuführen der neuen ersten Menge der ersten Formmasse (1) in Schritt e) und gegebenenfalls das Zuführen der ersten Menge der ersten Formmasse (1) in Schritt a) zeitlich und/oder räumlich separat von dem Zuführen der zweiten Menge der mindestens einen weiteren Formmasse (3) in Schritt c) durchgeführt wird.

**Claims**

1. An injection mold (9) for production of marbled moldings, comprising at least one hot runner (4), a cavity (29), an entry opening (8) into the injection mold (9) and an inlet (6) into the cavity (29), where the hot runner (4) has at least two ducts (41) that are connected at a first end (43) of each duct (41) to the inlet (6) into the cavity (29) and at a second end (45) of each duct (41) to the entry opening (8) into the injection mold (9), where the at least two ducts (41) each at least partly form a spiral (75) and the at least two ducts (41) are bounded by a one-piece component (46), and where the at least two ducts (41) are separated from one another between their first end (43) and their second end (45) by the one-piece component (46), where the at least two ducts (41) each have a center axis (67), and the center axis (67) is arranged in the form of the spiral (75) around a longitudinal hot runner axis (69), wherein the spiral (75) has different slopes at each of at least two different positions (44, 48).

2. The injection mold (9) according to claim 1, wherein the spiral (75) has a number of windings (50), and the number of windings (50) is within a range from more than 0.5 to 3.

3. The injection mold (9) according to either of claims 1 and 2, wherein the hot runner (4) has three to eight ducts (41).

4. The injection mold (9) according to any of claims 1 to 3, wherein a first slope of the spiral (75) at a first position (44) differs by at least 20° from a second slope of the spiral (75) at a second position (48).

5. The injection mold (9) according to any of claims 1 to 4, wherein the spiral (75) has a slope of less than 60° at at least one position (44, 48).

6. The injection mold (9) according to any of claims 1 to 5, wherein the slope of the spiral (75) decreases in a direction from the entry opening (8) to the inlet (6).

7. The injection mold (9) according to any of claims 1 to 6, wherein the hot runner (4) has a central bore (71) and optionally a closure element, especially a needle (73), along the longitudinal hot runner axis (69).

8. The injection mold (9) according to any of claims 1 to 7, wherein the at least two ducts (41) in a radial cross section of the hot runner (4) each have a round, ellipsoidal, ring segment-shaped or polygonal, such as hexagonal or triangular, cross-sectional area (63).

9. The injection mold (9) according to any of claims 1 to 8, wherein the one-piece component (46) is an insert (42) disposed in the hot runner (4), and the at least two ducts (41) are disposed in the insert (42).

10. A process for producing an injection mold (9) for production of marbled moldings, comprising at least one hot runner (4), a cavity (29), an entry opening (8) into the injection mold (9) and an inlet (6) into the cavity (29), where the hot runner (4) has at least two ducts (41) that are connected at a first end (43) of each duct (41) to the inlet (6) into the cavity (29) and at a second end (45) of each duct (41) to the entry opening (8) into the injection mold (9), where the at least two ducts (41) each at least partly form a spiral (75) and the at least two ducts (41) are bounded by a one-piece component (46), and where the at least two ducts (41) are separated from one another between their first end (43) and their second end (45) by the one-piece component (46), where at least the one one-piece component (46), especially the insert (42), is produced by an additive method, especially by means of 3D printing, and where the at least two ducts (41) each have a center axis (67), and the center axis (67) is arranged in the form of the spiral (75) around a longitudinal hot runner axis (69), wherein the spiral (75) has different slopes at each of at least two different positions (44, 48).

11. A process for producing marbled moldings, where a first molding compound (1) and at least one further molding compound (3) are each added separately in time and/or space to an injection unit (5) of a screw injection molding machine (7) and injected from the injection unit (5) of the screw injection molding machine (7) into an injection mold (9),

where the injection mold (9) comprises at least one hot runner (4), a cavity (29), an entry opening (8) into the injection mold (9) and an inlet (6) into the cavity (29), where the hot runner (4) has at least two ducts (41) that are connected at a first end (43) of each duct (41) to the inlet (6) into the cavity and at a second end (45) of each duct (41) to the entry opening (8) into the injection mold, where the at least two ducts (41) each at least partly form a spiral (75) and the at least two ducts (41) are bounded by a one-piece component (46), and where the at least two ducts (41) are separated from one another between their first end (43) and their second end (45) by the one-piece component (46), and where the at least two ducts (41) each have a center axis (67), and the center axis (67) is arranged in the form of the spiral (75) around a longitudinal hot runner axis (69), wherein the spiral (75) has different slopes at each of at least two different positions (44, 48).

12. The process according to claim 11, wherein the injection unit (5) comprises a barrel (11), a screw (13) having a screw tip (15) and a nozzle (17), and the screw (13) is rotatable and is disposed in the barrel (11) so as to be movable in the direction of a longitudinal axis (19) of the barrel (11) between a forward position (21) and a backward position (23), with a smaller distance (25) between the screw tip (15) and the nozzle (17) in the forward position (21) than in the backward position (23),

and where the first molding compound (1) comprises a first polymer compound and a first colorant, and the at least one further molding compound (3) comprises at least one further polymer compound and optionally at least one further colorant,
comprising the following steps:

a) optionally feeding a first amount of the first molding compound (1) onto the screw (13) when the screw (13) is in the backward position (23),
b) optionally advancing the screw (13) from the backward position (23) into the forward position (21),
c) feeding a second amount of the at least one further molding compound (3) onto the screw (13),
d) plastifying the first molding compound (1) and the at least one further molding compound (3) in the barrel (11) of the screw (13), with rotation of the screw (13) and conveying of at least a portion of the first molding compound (1) and at least a portion of the at least one further molding compound (3) into a clear space (27) in the barrel (11) between the nozzle (17) and the screw tip (15), and with the screw (13) moving from the forward position (21) into the backward position (23),
e) feeding a new first amount of the first molding compound (1) onto the screw (13) when the screw (13) is in the backward position (23),
f) injecting the first molding compound (1) and the at least one further molding compound (3) from the clear space (27) in the barrel (11) into a cavity (29) of the injection mold (9), with the screw (13) advancing from the backward position (23) into the forward position (21),
g) cooling the first molding compound (1) and the at least one further molding compound (3) in the injection mold (9), so as to give a marbled molding,
h) removing the marbled molding from the injection mold (9),

where steps c) to h) are repeated, step e) is conducted before step f), and step a) is optionally conducted before step b), and
where the feeding of the new first amount of the first molding compound (1) in step e) and optionally the feeding of the first amount of the first molding compound (1) in step a) is conducted separately in time and/or space from the feeding of the second amount of the at least one further molding compound (3) in step c).

## Revendications

1. Outil de moulage par injection (9) pour la fabrication de pièces moulées marbrées comprenant au moins un canal chaud (4), une cavité (29), une ouverture d'admission (8) dans l'outil de moulage par injection (9) et une entrée (6) dans la cavité (29), le canal chaud (4) présentant au moins deux canaux (41) reliés à une première extrémité (43) de chaque canal (41) à l'entrée (6) dans la cavité (29) et à une deuxième extrémité (45) de chaque canal (41) à l'ouverture d'admission (8) dans l'outil de moulage par injection (9), les au moins deux canaux (41) formant chacun au moins partiellement une spirale (75) et les au moins deux canaux (41) étant délimités par un composant (46) réalisé d'une seule pièce et les au moins deux canaux (41) étant séparés l'un de l'autre entre leur première extrémité (43) et leur deuxième extrémité (45) par le composant (46) réalisé d'une seule pièce, les au moins deux canaux (41) présentant chacun un axe central (67) et l'axe central (67) étant agencé sous la forme de la spirale (75) autour d'un axe longitudinal de canal chaud (69), **caractérisé en ce que** la spirale (75) présente des pas différents respectifs en au moins deux positions différentes (44, 48).

2. Outil de moulage par injection (9) selon la revendication 1, **caractérisé en ce que** la spirale (75) présente un nombre de spires (50) et le nombre de spires (50) se situe dans une plage allant de plus de 0,5 à 3.

3. Outil de moulage par injection (9) selon l'une quelconque des revendications 1 ou 2, **caractérisé en ce que** le canal chaud (4) présente trois à huit canaux (41).

4. Outil de moulage par injection (9) selon l'une quelconque des revendications 1 à 3, **caractérisé en ce qu'**un premier pas de la spirale (75) à une première position (44) diffère d'au moins 20° d'un deuxième pas de la spirale (75) à une deuxième position (48).

**5.** Outil de moulage par injection (9) selon l'une quelconque des revendications 1 à 4, **caractérisé en ce que** la spirale (75) présente un pas inférieur à 60° en au moins une position (44, 48).

**6.** Outil de moulage par injection (9) selon l'une quelconque des revendications 1 à 5, **caractérisé en ce que** le pas de la spirale (75) diminue dans une direction allant de l'ouverture d'admission (8) à l'entrée (6).

**7.** Outil de moulage par injection (9) selon l'une quelconque des revendications 1 à 6, **caractérisé en ce que** le canal chaud (4) présente, le long de l'axe longitudinal de canal chaud (69), un alésage central (71) et éventuellement un élément de fermeture, notamment une aiguille (73).

**8.** Outil de moulage par injection (9) selon l'une quelconque des revendications 1 à 7, **caractérisé en ce que** les au moins deux canaux (41) présentent chacun, dans une section transversale radiale du canal chaud (4), une surface de section transversale (63) ronde, ellipsoïdale, en forme de segment annulaire ou polygonale, telle qu'hexagonale ou triangulaire.

**9.** Outil de moulage par injection (9) selon l'une quelconque des revendications 1 à 8, **caractérisé en ce que** le composant (46) réalisé d'une seule pièce est un insert (42) agencé dans le canal chaud (4), et les au moins deux canaux (41) sont agencés dans l'insert (42).

**10.** Procédé de fabrication d'un outil de moulage par injection (9) pour la fabrication de pièces moulées marbrées comprenant au moins un canal chaud (4), une cavité (29), une ouverture d'admission (8) dans l'outil de moulage par injection (9) et une entrée (6) dans la cavité (29), le canal chaud (4) présentant au moins deux canaux (41) reliés à une première extrémité (43) de chaque canal (41) à l'entrée (6) dans la cavité (29) et à une deuxième extrémité (45) de chaque canal (41) à l'ouverture d'admission (8) dans l'outil de moulage par injection (9), les au moins deux canaux (41) formant chacun au moins partiellement une spirale (75) et les au moins deux canaux (41) étant délimités par un composant (46) réalisé d'une seule pièce et les au moins deux canaux (41) étant séparés l'un de l'autre entre leur première extrémité (43) et leur deuxième extrémité (45) par le composant (46) réalisé d'une seule pièce, au moins le composant (46) réalisé d'une seule pièce, notamment l'insert (42), étant fabriqué par un procédé additif, notamment au moyen d'une impression 3D, et

les au moins deux canaux (41) présentant chacun un axe central (67) et l'axe central (67) étant agencé sous la forme de la spirale (75) autour d'un axe longitudinal de canal chaud (69),
**caractérisé en ce que** la spirale (75) présente des pas différents respectifs à au moins deux positions différentes (44, 48).

**11.** Procédé de fabrication de pièces moulées marbrées, une première masse de moulage (1) et au moins une autre masse de moulage (3) étant ajoutées respectivement de manière séparée dans le temps et/ou dans l'espace à une unité d'injection (5) d'une machine de moulage par injection à vis sans fin (7) et étant injectées à partir de l'unité d'injection (5) de la machine de moulage par injection à vis sans fin (7) dans un outil de moulage par injection (9),

l'outil de moulage par injection (9) comprenant au moins un canal chaud (4), une cavité (29), une ouverture d'admission (8) dans l'outil de moulage par injection (9) et une entrée (6) dans la cavité (29), le canal chaud (4) présentant au moins deux canaux (41) reliés à une première extrémité (43) de chaque canal (41) à l'entrée (6) dans la cavité et à une deuxième extrémité (45) de chaque canal (41) à l'ouverture d'admission (8) dans l'outil de moulage par injection, les au moins deux canaux (41) formant chacun au moins partiellement une spirale (75) et les au moins deux canaux (41) étant délimités par un composant (46) réalisé d'une seule pièce et les au moins deux canaux (41) étant séparés l'un de l'autre entre leur première extrémité (43) et leur deuxième extrémité (45) par le composant (46) réalisé d'une seule pièce et
les au moins deux canaux (41) présentant chacun un axe central (67) et l'axe central (67) étant agencé sous la forme de la spirale (75) autour d'un axe longitudinal de canal chaud (69),
**caractérisé en ce que** la spirale (75) présente des pas différents respectifs à au moins deux positions différentes (44, 48).

**12.** Procédé selon la revendication 11, **caractérisé en ce que** l'unité d'injection (5) comprend un cylindre creux (11), une vis sans fin (13) avec une pointe de vis sans fin (15) et une buse (17), et la vis sans fin (13) est agencée de manière rotative et mobile dans le cylindre creux (11) dans la direction d'un axe longitudinal (19) du cylindre creux (11) entre une position avant (21) et une position arrière (23), une distance (25) entre la pointe de vis sans fin (15) et la buse (17) étant plus petite dans la position avant (21) que dans la position arrière (23),

et la première masse de moulage (1) contenant une première masse polymère et un premier agent de coloration et l'au moins une autre masse de moulage (3) contenant au moins une autre masse polymère et éventuellement au moins un autre agent de coloration,

comprenant les étapes suivantes :

a) éventuellement, l'amenée d'une première quantité de la première masse de moulage (1) sur la vis sans fin (13) lorsque la vis sans fin (13) se trouve dans la position arrière (23),

b) éventuellement l'avance de la vis sans fin (13) de la position arrière (23) à la position avant (21),

c) l'amenée d'une deuxième quantité de l'au moins une autre masse de moulage (3) sur la vis sans fin (13),

d) la plastification de la première masse de moulage (1) et l'au moins une autre masse de moulage (3) dans le cylindre creux (11) de la vis sans fin (13), la vis sans fin (13) tournant et au moins une partie de la première masse de moulage (1) et au moins une partie de l'au moins une autre masse de moulage (3) étant transportées dans un espace libre (27) dans le cylindre creux (11) entre la buse (17) et la pointe de vis sans fin (15) et la vis sans fin (13) se déplaçant de la position avant (21) à la position arrière (23),

e) l'amenée d'une nouvelle première quantité de la première masse de moulage (1) sur la vis sans fin (13) lorsque la vis sans fin (13) se trouve dans la position arrière (23),

f) l'injection de la première masse de moulage (1) et de l'au moins une autre masse de moulage (3) à partir de l'espace libre (27) dans le cylindre creux (11) dans une cavité (29) de l'outil de moulage par injection (9), la vis sans fin (13) avançant de la position arrière (23) à la position avant (21),

g) le refroidissement de la première masse de moulage (1) et de l'au moins une autre masse de moulage (3) dans l'outil de moulage par injection (9), de manière à obtenir une pièce moulée marbrée,

h) le retrait de la pièce moulée marbrée de l'outil de moulage par injection (9),

les étapes c) à h) étant répétées, l'étape e) étant effectuée avant l'étape f) et l'étape a) étant éventuellement effectuée avant l'étape b), et

l'amenée de la nouvelle première quantité de la première masse de moulage (1) à l'étape e) et éventuellement l'amenée de la première quantité de la première masse de moulage (1) à l'étape a) étant effectuées séparément, dans le temps et/ou dans l'espace, de l'amenée de la deuxième quantité de l'au moins une autre masse de moulage (3) à l'étape c).

# FIG.1

# FIG.2

FIG.3

FIG.4

FIG.5

FIG.6

FIG.7

FIG.8

FIG.9

# FIG.10

# FIG.11

# FIG.12

# FIG.13

# FIG.14

# FIG.15

# FIG.16

# FIG.17

# FIG.18

# FIG.19

# FIG.20

# FIG.21

FIG.22

FIG.23

FIG.24

# FIG.25

# FIG.26

# FIG.27

# FIG.28

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19730380 A1
- FR 2482899
- US 4303382 A
- WO 2019145877 A1
- WO 2004098759 A1
- CA 2861399
- WO 2013122789 A1
- WO 2011156436 A1

- US 6245278 B1
- WO 2012051079 A1
- WO 2014133702 A1
- WO 0134365 A1
- US 6089468 A
- WO 2009055097 A1
- US 5405258 A
- EP 546554 A